(19) Europäisches Patentamt / European Patent Office / Office européen des brevets

(11) **EP 2 516 352 B1**

(12) **FASCICULE DE BREVET EUROPEEN**

(45) Date de publication et mention de la délivrance du brevet:
**20.02.2019 Bulletin 2019/08**

(51) Int Cl.:
*C04B 35/111* (2006.01)    *C04B 35/18* (2006.01)
*C04B 35/44* (2006.01)    *C04B 35/486* (2006.01)
*C04B 35/491* (2006.01)    *C04B 35/50* (2006.01)
*C04B 35/505* (2006.01)    *C04B 35/563* (2006.01)
*C04B 35/195* (2006.01)    *C04B 35/443* (2006.01)
*C04B 35/581* (2006.01)    *C04B 35/584* (2006.01)
*C04B 35/583* (2006.01)    *C04B 35/56* (2006.01)
*C04B 35/565* (2006.01)    *C04B 35/58* (2006.01)
*C04B 35/587* (2006.01)    *C04B 35/591* (2006.01)
*C04B 35/597* (2006.01)    *C04B 35/634* (2006.01)
*C04B 35/626* (2006.01)

(21) Numéro de dépôt: **10814704.2**

(22) Date de dépôt: **21.12.2010**

(86) Numéro de dépôt international:
**PCT/IB2010/055991**

(87) Numéro de publication internationale:
**WO 2011/077379 (30.06.2011 Gazette 2011/26)**

(54) **POUDRE DE GRANULES DE CÉRAMIQUE**

KERAMISCHES GRANULATPULVER

CERAMIC POWDER OF GRANULES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2009 FR 0959583**

(43) Date de publication de la demande:
**31.10.2012 Bulletin 2012/44**

(73) Titulaire: **Saint-Gobain Centre De Recherches Et D'etudes Europeen**
**92400 Courbevoie (FR)**

(72) Inventeur: **NAHAS, Nabil**
**F-77700 Serris (FR)**

(74) Mandataire: **Nony**
**11 rue Saint-Georges**
**75009 Paris (FR)**

(56) Documents cités:
EP-B1- 0 517 437     WO-A1-89/01923
US-A1- 2009 115 084

- DAN GUTKNECHT: "Thése; Elaboration et caractérisation de micro- et nano-composites alumine-zircone pour application orthoédiue", INTERNET CITATION, 11 octobre 2006 (2006-10-11), pages 34-47, XP002594689, Extrait de l'Internet: URL:http://www.google.fr/search?hl=fr&q=%22atomisation+barbotine+zircone%22 [extrait le 2010-07-28]
- Y. Mahiat: "La zircone: cette méconnue", Strategie prothétique, février 2006, vol. 6, No. 1 , 1 janvier 2006 (2006-01-01), pages 55-66, XP002594690, Extrait de l'Internet: URL:http://www.eric-veyrat.fr/topic1/zircone-meconnue.pdf [extrait le 2010-07-28]
- C.W. NIES ET AL.: "Effect of Glass-Transition Temperature of Polyethylene Glyco l -Plasticized Polyvilyl Alkohol on Granule Ompaction", J. AMER. CERAM. SOC., VOL. 67, NO.4; 25 -4-1984, 25 avril 1983 (1983-04-25), - 23 janvier 1984 (1984-01-23), pages 301-304, XP002594691, Chicago, illinois (USA)
- WILLIAM J. WALKER JR. ET AL.: "Influence of Slurry Paremeters on the Characteristics of Spray-Dried Granules", J. AM. CERAM. SOC. 82, (7), 1999, 1 janvier 1999 (1999-01-01), pages 1711-1719, XP002594692, N.Y (USA)

- **STANLEY J. LUKASIEWICZ: "Spray-Drying Ceramic Powders", J. AM. CERAM. SOC., vol. 72, no. 4, 1 janvier 1989 (1989-01-01), pages 617-624, XP002595161, Massachusetts; USA**
- **WU X KEVIN ET AL: "Acrylic binders for dry pressing ceramics", AMERICAN CERAMIC SOCIETY BULLETIN, AMERICAN CERAMIC SOCIETY. COLUMBUS, US, vol. 76, no. 1, 1 janvier 1997 (1997-01-01), pages 49-52, XP001539728, ISSN: 0002-7812**
- **DAVID W., ET AL: "Using Poymer Blends to Fine-Tune Binder Prerformance", PRESENTED AT THE 1995 ANNUAL MEETING OF THE AMERICAN CERAMIC SOCIETY, 1 January 1995 (1995-01-01), pages 1-4, XP9188220, USA**
- **"Chapter 12" In: James S. Reed: "Principles of ceramics processing", 1 January 1995 (1995-01-01), Wiley-Interscience Publication; Second edition, USA pages Cover pages 1,2; 200 to 209 and 386-387, * Page 386; table 20.2 ***
- **EUGENE R. HOFFMAN: ""Importance of Binders in Spray Dried Pressbodies"", CERAMIC BULLETIN, vol. 51, no. 3, 1 January 1972 (1972-01-01), pages 240-242, N.Y (USA)**
- **STANLEY J. LUKASIEWICZ: "Spray-Drying Ceramic Powders", J. AM. CERAM. SOC., vol. 72, no. 4, 1 January 1989 (1989-01-01), pages 617-624, USA**
- **KOJI MATSUI: "Initial Sintering Mechanism of 3 mol% Yttria-doped Zirconia Powder: Effect of Alumina", TOSOH RESEARCH & TECHNOLOGY REVIEW, vol. 51, 1 January 2007 (2007-01-01), pages 9-18,**
- **William E.Lee and W.Mark Rainforth: "Ceramic Microstructures; Property control by processing; First Edition", 1 January 1994 (1994-01-01), Chapman & Hall, UK ISBN: 0412431408 * Page 21, premier paragraphe ***
- **Data Sheet DURAMAX B-1000 (Ceramic Binder) 2002 Rohm andHaas Company**
- **Report of NIRO ltd. (GEA Powder Technology Division); D M Dubbin (05 July 1999): "Control of Ceramic Particle Properties by Spray Drying".**
- **Data Sheet DURAMAX B-1007 (Ceramic Binder) 2002 Rohm andHaas Company**
- **Helen M.Ondik, Howard F. McMurdie: "Phase Diagramms for Zirconium and Zirconia Systems", 1 January 1998 (1998-01-01), The American Ceramic Society, USA ISBN: 1-57498-055-6 pages Cover page; ii, iii, 100-119, * the whole document ***
- **RICHARD H. J. HANNINK: "Transformation Toughening in Zirconia-Containing Ceramics", JOURNAL OF THE AMERICAN CERAMIC SOCIETY, vol. 83, no. 3, 1 March 2000 (2000-03-01), pages 461-487, Australia**
- **Data Sheet TOSOH Corp; TOSOH ZIRCONIA POWDER; Specification and Typical Properties; 01-08-2004**

## Description

### Domaine technique

L'invention concerne une poudre de granules à base de céramique, un procédé de fabrication de tels granules et une pièce frittée obtenue à partir de tels granules.

### Etat de la technique

Dans une pièce frittée à base de céramique, la résistance mécanique diminue avec la quantité de défauts au sein de la pièce et augmente avec la masse volumique.

JP8217448 décrit une utilisation de granules à base de zircone pour augmenter la masse volumique après frittage et la résistance en flexion trois points. Ces granules sont obtenus par atomisation d'une barbotine dont le poids au litre est réglé entre 0,80 et 1,2 g/cm$^3$. Ce poids au litre est ajusté par une agitation vigoureuse ainsi que par l'utilisation d'agents moussants ou inhibiteurs de mousse. Les exemples divulguent également l'ajout, dans la barbotine, de 3% d'une résine acrylique, en pourcentage de la matière sèche. Ces granules présentent un diamètre compris entre 0,01 et 0,2 mm, et un diamètre médian d'environ 60 microns. Ils permettent un bon remplissage du moule lors de la fabrication de la préforme et présentent une aptitude à se déformer sous l'effet de la pression de façonnage, ce qui permet de limiter le nombre de défauts présents dans la préforme après pressage.

Cependant, les granules décrits dans JP8217448 ne sont pas adaptés à la fabrication de pièces de grandes dimensions, et en particulier à la fabrication de pièces présentant un volume supérieur à 100 cm$^3$. En effet, les pièces de grandes dimensions obtenues à partir des granules décrits dans JP8217448 peuvent présenter, après frittage, des fissures dans leur coeur ainsi que des défauts de surface, principalement des défauts d'écaillage.

Reed, J. S. (1995), Chapter 12, In Principles of ceramics processing. New York: Wiley & Sons décrit différents additifs dans des granules céramiques, notamment des plastifiants, des agents moussant ou anti-moussant, des lubrifiants et des préservateurs.

Whitman, D. W., Tang, X., & Cumbers, D. I. (1996). Using polymer blends to fine-tune binder performance (No. CONF-9505249--), American Ceramic Society, Westerville, OH (United States), décrit l'influence de la température vitreuse de liants commerciaux sur les procédés de pressage à sec et coulage en bande.

Lukasiewicz, S. J. (1989), Spray-Drying Ceramic Powders. Journal of the American Ceramic Society, 72(4), 617-624, décrit un procédé de séchage par atomisation afin de produire une poudre coulable.

Hoffman, E. R. (1972). Importance of Binders in Spray-Dried Pressbodies. American Ceramic Society Bulletin, 51(3), 240, évalue le fonctionnement global d'un procédé de séchage par pulvérisation et l'effet des liants dans ce procédé.

Il existe un besoin permanent pour une poudre permettant de fabriquer une pièce frittée à base d'un matériau céramique présentant un volume supérieur à 100 cm$^3$, en particulier dont toutes les dimensions sont supérieures à 2 cm, de bonnes performances mécaniques et une masse volumique élevée.

Un but de l'invention est de répondre à ce besoin.

### Résumé de l'invention

L'invention propose une poudre selon la revendication 1.

De préférence, plus de 80%, plus de 90%, voire sensiblement 100% des granules présentent une composition conforme à la composition de la poudre.

Comme on le verra plus en détail dans la suite de la description, les inventeurs ont découvert que la distribution particulière des tailles de granules selon l'invention permet d'obtenir d'excellentes performances mécaniques, à condition de limiter la teneur totale du premier liant, du liant additionnel et de l'additif temporaire à moins de 9,0%. Les inventeurs ont en effet constaté que, contrairement à l'habitude consistant à augmenter la teneur en liant en proportion du diamètre médian, il était avantageux, dans la plage de diamètres médians revendiquée, de maintenir la teneur en premier liant relativement faible. En particulier, ils ont découvert que cette limitation de la teneur en premier liant limite l'apparition de défauts internes permanents, c'est-à-dire non éliminés lors du frittage de la préforme obtenue par pressage desdits granules.

Les inventeurs ont également constaté que, contrairement à l'habitude consistant à ajouter des liants présentant des températures de transition vitreuse élevées afin d'améliorer la résistance mécanique en cru, il était avantageux de sélectionner des liants présentant une température de transition vitreuse inférieure à 25°C. Ils ont en effet constaté que ce type de liant facilite la déformation des granules lors du pressage sans pour autant diminuer de façon rédhibitoire leur résistance mécanique en cru.

L'utilisation d'un liant présentant une température de transition vitreuse faible est contraire à un préjugé technique selon lequel on considère que la résistance mécanique en cru diminue avec la température de transition vitreuse du liant.

Une poudre selon l'invention peut encore comporter une ou plusieurs des caractéristiques optionnelles et préférées suivantes :

- le nitrure est de préférence le nitrure de silicium, et/ou,
- le carbure est de préférence le carbure de silicium, et/ou,
  le matériau céramique est choisi dans le groupe formé par

  - l'alumine,
  - l'oxyde d'yttrium,
  - l'oxyde de cérium,
  - les oxydes de cérium dopés aux terres rares,
  - les oxydes de cérium dopés à la zircone,
  - le spinelle $MgAl_2O_4$,
  - les grenats, de préférence $Y_3Al_5O_{12}$,
  - les pérovskites de formules A'B'$O_3$, A' étant de préférence choisi dans le groupe formé des éléments Sr, Ca, Mg, Pb, Ba, La, Ce et leurs mélanges ; et B' étant de préférence choisi dans le groupe formé des éléments Ti, Zr, Hf, Sn, Mn et leurs mélanges,
  - les feldspaths, de préférence

    - de formule $XO.Al_2O_3.2SiO_2$, avec X choisi dans le groupe formé des éléments de la colonne 2 (alcalino-terreux) du tableau périodique et de leurs mélanges,
    - de formule $X'_2O.Al_2O_3.2SiO_2$, avec X' choisi dans le groupe formé des éléments de la colonne 1 (alcalins) du tableau périodique des éléments et leurs mélanges,
    - de formule $Z_2O_3.Al_2O_3.2SiO_2$, avec Z choisi dans le groupe formé des terres rares,
    - et leurs mélanges

  - les cordiérites, de préférence
    de formule $X'_2O.Al_2O_3.(5/2)SiO_2$, avec X' choisi dans le groupe formé des éléments de la colonne 1 (alcalins) du tableau périodique des éléments et leurs mélanges,

    - de formule $Z_2O_3.Al_2O_3.(5/2)SiO_2$, avec Z choisi dans le groupe formé des terres rares et leurs mélanges,
    - et leurs mélanges ;

  - et leurs mélanges

- De préférence le matériau céramique est choisi dans le groupe formé par

  - l'alumine,
  - l'oxyde d'yttrium,
  - l'oxyde de cérium,
  - l'oxyde de cérium dopé avec une terre rare choisie dans le groupe formé de $La_2O_3$, $Pr_2O_3$, $Sm_2O_3$, $Gd_2O_3$ et de leurs mélanges, de préférence choisie dans le groupe formé de $La_2O_3$, $Gd_2O_3$ et leurs mélanges,
  - l'oxyde de cérium dopé à la zircone,
  - le spinelle $MgAl_2O_4$,
  - les pérovskites de formule A'B'$O_3$, A' étant de préférence choisi dans le groupe formé des éléments Sr, Ca, Pb, Ba et leurs mélanges ; et B' étant de préférence choisi dans le groupe formé des éléments Ti, Zr et leurs mélanges, de préférence les pérovskites (Pb(Zr, Ti)$O_3$ et (Ca, Ba, Sr)$TiO_3$,
  - les feldspaths, de préférence

    - de formule $XO.Al_2O_3.2SiO_2$, avec X choisi dans le groupe formé des éléments Mg, Ca, Sr et leurs mélanges,
    - de formule $X'_2O.Al_2O_3.2SiO_2$, avec X' choisi dans le groupe formé des éléments Na, K et leurs mélanges,
    - de formule $La_2O_3.Al_2O_3.2SiO_2$,
    - et leurs mélanges

  - les cordiérites, de préférence

    - de formule $XO.Al_2O_3.(5/2)SiO_2$, avec X choisi dans le groupe formé des éléments Mg, Ca et leurs mélanges,

- de formule $X'_2O.Al_2O_3.(5/2)SiO_2$, avec X' choisi dans le groupe formé des éléments Na, K et leurs mélanges,
- de formule $La_2O_3.Al_2O_3.(5/2)SiO_2$,
- et leurs mélanges ;

- et leurs mélanges

- La masse volumique relative des granules est comprise entre 40% et 50%.
- Les granules incorporent des particules dudit matériau céramique dont le diamètre médian ($D_{50}$) est inférieur à 1 $\mu$m, de préférence inférieur à 0,8 $\mu$m, voire inférieur à 0,5 $\mu$m.
- Le premier liant présente une température de transition vitreuse supérieure à -30°C.
- Le premier liant est choisi parmi les polymères organiques amorphes, les résines polyacryliques, les polymères à base d'acrylates purs, les co-polymères à base d'acrylates et de styrène, et leurs mélanges. De préférence, le premier liant est choisi parmi les résines polyacryliques, les polymères à base d'acrylates purs, les co-polymères à base d'acrylates et de styrène, et leurs mélanges. De préférence encore, le premier liant est choisi parmi les résines polyacryliques, les co-polymères à base d'acrylates et de styrène, et leurs mélanges.
- De préférence, le matériau céramique et/ou le premier liant et/ou le liant additionnel et/ou l'additif temporaire et/ou l'additif de frittage du matériau céramique sont répartis de façon homogène au sein des granules de la poudre.
- Le premier liant et/ou le liant additionnel sont choisis parmi les polymères ne contenant pas d'éléments inorganiques.
- La teneur en additif temporaire est inférieure à 1%. De préférence, l'additif temporaire est un additif organique, de préférence choisi parmi les dispersants ou tensio-actifs, les épaississants, les anti-moussants, les conservateurs, les lubrifiants, et leurs mélanges.
- L'additif de frittage est inorganique.
- La teneur en impuretés est inférieure à 1,0%, de préférence inférieure à 0,5%, voire inférieure à 0,3%, voire inférieure à 0,1%. De préférence, les impuretés sont des oxydes.
- Le diamètre médian ($D_{50}$) de la poudre est supérieur à 90 $\mu$m et/ou inférieur à 120 $\mu$m.
- Le percentile 10 ($D_{10}$) est supérieur à 50 $\mu$m, de préférence encore supérieur à 60 $\mu$m.
- Le percentile 90 ($D_{90}$) est inférieur à 300 $\mu$m, de préférence inférieur à 250 $\mu$m, de préférence encore inférieur à 200 $\mu$m.
- Le percentile 99,5 ($D_{99,5}$) est inférieur à 400 $\mu$m, de préférence encore inférieur à 300 $\mu$m.

Dans un premier mode de réalisation, le matériau céramique est le nitrure d'aluminium (AlN) et forme le complément à 100% de la composition de la matière sèche, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un deuxième mode de réalisation, le matériau céramique est le nitrure d'aluminium (AlN) et forme le complément à 100% de la composition de la matière sèche, la teneur en additif de frittage est comprise entre 0,5% et 5%, de préférence ledit additif de frittage est choisi dans le groupe formé des oxydes de terres rares, des éléments des colonnes 2, 3 et 4 du tableau périodique des éléments et de leurs mélanges ; des nitrures de terres rares, des éléments des colonnes 2, 3 et 4 du tableau périodique des éléments et de leurs mélanges ; de préférence ledit additif de frittage est choisi dans le groupe formé de $Y_2O_3$ et des nitrures des éléments Mg, Ca, Ti, Zr, Si, B et leurs mélanges, de préférence ledit additif de frittage est choisi dans le groupe formé de $Y_2O_3$ et des nitrures des éléments Ti, Si, B et leurs mélanges, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un troisième mode de réalisation, le matériau céramique est le nitrure de bore (BN) et forme le complément à 100% de la composition de la matière sèche, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un quatrième mode de réalisation, le matériau céramique est le nitrure de bore (BN) et forme le complément à 100% de la composition de la matière sèche, la teneur en additif de frittage est comprise entre 0,5% et 5%, de préférence ledit additif de frittage est choisi dans le groupe formé de LaB6, des oxydes de terres rares, des éléments des colonnes 2, 3 et 4 du tableau périodique des éléments et de leurs mélanges ; des nitrures de terres rares, des éléments des colonnes 2, 3 et 4 du tableau périodique des éléments, et de leurs mélanges ; de préférence ledit additif de frittage est choisi dans le groupe formé de LaB6, de $Y_2O_3$ et des nitrures des éléments Mg, Ca, Ti, Zr, Si, Al et leurs mélanges, de préférence ledit additif de frittage est choisi dans le groupe formé de LaB6, de $Y_2O_3$ et des nitrures des éléments Ti, Si, Al et leurs mélanges, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un cinquième mode de réalisation, le matériau céramique est le nitrure de silicium ($Si_3N_4$) et forme le complément à 100% de la composition de la matière sèche, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un sixième mode de réalisation, le matériau céramique est le nitrure de silicium ($Si_3N_4$) et forme le complément à 100% de la composition de la matière sèche, la teneur en additif de frittage est comprise entre 0,5% et 15%, de préférence entre 0,5% et 5%, de préférence ledit additif de frittage est choisi dans le groupe formé des oxydes de terres rares, des éléments des colonnes 2, 3 et 4 du tableau périodique des éléments et de leurs mélanges ; des nitrures de terres rares, des éléments des colonnes 2, 3 et 4 du tableau périodique des éléments, et de leurs mélanges ; de préférence ledit additif de frittage est choisi dans le groupe formé de MgO, d'$Al_2O_3$, de $Y_2O_3$, des nitrures des éléments Mg, Ca, Ti, Zr, Al, B et leurs mélanges, de préférence ledit additif de frittage est choisi dans le groupe formé de MgO, d'$Al_2O_3$, de $Y_2O_3$, des nitrures d'un ou plusieurs éléments parmi Ti, Al, B, et leurs mélanges, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un septième mode de réalisation, le matériau céramique est le nitrure de titane (TiN) et forme le complément à 100% de la composition de la matière sèche, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un huitième mode de réalisation, le matériau céramique est le nitrure de titane (TiN) et forme le complément à 100% de la composition de la matière sèche, la teneur en additif de frittage est comprise entre 0,5% et 5%, de préférence ledit additif de frittage est choisi dans le groupe formé des oxydes de terres rares, des éléments des colonnes 2, 3 et 4 du tableau périodique des éléments, et de leurs mélanges ; des nitrures de terres rares, des éléments des colonnes 2, 3 et 4 du tableau périodique des éléments, et de leurs mélanges ; de préférence ledit additif de frittage est choisi dans le groupe des nitrures des éléments Mg, Ca, Zr, Al, Si, B et leurs mélanges, de préférence ledit additif de frittage est choisi dans le groupe des nitrures des éléments Al, Si, B et leurs mélanges, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un neuvième mode de réalisation, le matériau céramique est le carbure de titane (TiC) et forme le complément à 100% de la composition de la matière sèche, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un dixième mode de réalisation, le matériau céramique est le carbure de titane (TiC) et forme le complément à 100% de la composition de la matière sèche, la teneur en additif de frittage est comprise entre 0,5% et 5%, de préférence ledit additif de frittage est choisi dans le groupe formé des oxydes des éléments Si, Al, B, des terres rares, des éléments des colonnes 2, 3 et 4 du tableau périodique des éléments, et de leurs mélanges ; et des nitrures des éléments Si, Al, B, des terres rares, des éléments des colonnes 2, 3 et 4 du tableau périodique des éléments, et de leurs mélanges ; des carbures des éléments Si, Al, B, des terres rares, des éléments des colonnes 2, 3 et 4 du tableau périodique des éléments, et de leurs mélanges ; de préférence ledit additif de frittage est choisi dans le groupe des carbures des éléments Si, Al, B, Zr et leurs mélanges, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un onzième mode de réalisation, le matériau céramique est le carbure de silicium (SiC) et forme le complément à 100% de la composition de la matière sèche, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un douzième mode de réalisation, le matériau céramique est le carbure de silicium (SiC) et forme le complément à 100% de la composition de la matière sèche, la teneur en additif de frittage est comprise entre 0,5% et 5%, de préférence ledit additif de frittage est choisi dans le groupe formé des oxydes des éléments Si, Al, B, des terres rares, des éléments des colonnes 2, 3 et 4 du tableau périodique des éléments, et de leurs mélanges ; des nitrures des éléments Si, Al, B, des terres rares, des éléments des colonnes 2, 3 et 4 du tableau périodique des éléments, et de leurs mélanges ; et des carbures des éléments Si, Al, B, des terres rares, des éléments des colonnes 2, 3 et 4 du tableau périodique des éléments, et de leurs mélanges ; de préférence ledit additif de frittage est choisi dans le groupe formé de $Al_2O_3$, $Y_2O_3$, $SiO_2$, des carbures des éléments Al, B, Ti, Zr et leurs mélanges, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un treizième mode de réalisation, le matériau céramique est le carbure de bore ($B_4C$) et forme le complément à 100% de la composition de la matière sèche la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un quatorzième mode de réalisation, le matériau céramique est le carbure de bore ($B_4C$) et forme le complément à 100% de la composition de la matière sèche, la teneur en additif de frittage est comprise entre 0,5% et 5%, de préférence ledit additif de frittage est choisi dans le groupe formé des oxydes des éléments Si, Al, B, des terres rares, des éléments des colonnes 2, 3 et 4 du tableau périodique des éléments, et de leurs mélanges ; des nitrures des éléments Si, Al, B, des terres rares, des éléments des colonnes 2, 3 et 4 du tableau périodique des éléments, et de leurs mélanges ; et des carbures des éléments Si, Al, B, des terres rares, des éléments des colonnes 2, 3 et 4 du tableau périodique des éléments, et leurs mélanges ; de préférence ledit additif de frittage est choisi dans le groupe des carbures des éléments Si, Al, Ti, Zr et leurs mélanges, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un quinzième mode de réalisation, le matériau céramique est le carbure de zirconium (ZrC) et forme le complément à 100% de la composition de la matière sèche, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un seizième mode de réalisation, le matériau céramique est le carbure de zirconium (ZrC) et forme le complément à 100% de la composition de la matière sèche, la teneur en additif de frittage est comprise entre 0,5% et 5%, de préférence ledit additif de frittage est choisi dans le groupe formé des oxydes des éléments Si, Al, B, des terres rares, des éléments des colonnes 2, 3 et 4 du tableau périodique des éléments, et de leurs mélanges ; des nitrures des éléments Si, Al, B, des terres rares, des éléments des colonnes 2, 3 et 4 du tableau périodique des éléments, et de leurs mélanges ; et des carbures des éléments Si, Al, B, des terres rares, des éléments des colonnes 2, 3 et 4 du tableau périodique des éléments, et leurs mélanges ; de préférence ledit additif de frittage est choisi dans le groupe des carbures des éléments Si, Al, Ti, B et leurs mélanges, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un dix-septième mode de réalisation, le matériau céramique est le carbure de tungstène (WC) et forme le complément à 100% de la composition de la matière sèche, la teneur en premier liant est comprise entre 2,5% et 4%

en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un dix-huitième mode de réalisation, le matériau céramique est l'alumine ($Al_2O_3$) et forme le complément à 100% de la composition de la matière sèche, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un dix-neuvième mode de réalisation, le matériau céramique est l'alumine ($Al_2O_3$) et forme le complément à 100% de la composition de la matière sèche, la teneur en additif de frittage est comprise entre 0,02% et 15%, de préférence comprise entre 0,02% et 1%, de préférence ledit additif de frittage est choisi dans le groupe formé des oxydes des éléments Si, des terres rares, des éléments des colonnes 1, 2, 3 et 4 du tableau périodique des éléments, et leurs mélanges ; de préférence ledit additif de frittage est choisi dans le groupe formé par MgO, CaO, BaO, $Na_2O$, $K_2O$, $Y_2O_3$, $TiO_2$, $ZrO_2$ et leurs mélanges, de préférence ledit additif de frittage est choisi dans le groupe formé de MgO, $Y_2O_3$, $TiO_2$, $ZrO_2$ et leurs mélanges, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un trentième mode de réalisation, le matériau céramique est l'oxyde d'yttrium ($Y_2O_3$) et forme le complément à 100% de la composition de la matière sèche, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un trente et unième mode de réalisation, le matériau céramique est l'oxyde d'yttrium ($Y_2O_3$) et forme le complément à 100% de la composition de la matière sèche, la teneur en additif de frittage est comprise entre 0,1% et 5%, de préférence ledit additif de frittage est choisi dans le groupe formé des oxydes des terres rares, des oxydes des éléments des colonnes 2, 3 et 4 du tableau périodique des éléments, de $SiO_2$, de $Al_2O_3$, et leurs mélanges; de préférence ledit additif de frittage est choisi dans le groupe formé par $Al_2O_3$, $ZrO_2$ et leurs mélanges, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un trente deuxième mode de réalisation, le matériau céramique est l'oxyde de cérium ($CeO_2$) et forme le complément à 100% de la composition de la matière sèche, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un trente troisième mode de réalisation, le matériau céramique est un oxyde de cérium dopé aux terres rares, et forme le complément à 100% de la composition de la matière sèche, de préférence un oxyde de cérium dopé aux terres rares choisies dans le groupe formé de $La_2O_3$, $Pr_2O_3$, $Sm_2O_3$, $Gd_2O_3$ et de leurs mélanges, de préférence choisi dans le groupe formé de $La_2O_3$, $Gd_2O_3$ et leurs mélanges, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un trente quatrième mode de réalisation, le matériau céramique est un oxyde de cérium dopé à la zircone et forme le complément à 100% de la composition de la matière sèche, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un trentième cinquième mode de réalisation, le matériau céramique est le spinelle $MgAl_2O_4$ et forme le complément à 100% de la composition de la matière sèche, la teneur en premier liant est comprise entre 2,5% et 4%

en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un trente sixième mode de réalisation, le matériau céramique est un grenat et forme le complément à 100% de la composition de la matière sèche, de préférence $Y_3Al_5O_{12}$, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un trente septième mode de réalisation, le matériau céramique est un pérovskite de formule $A'B'O_3$ et forme le complément à 100% de la composition de la matière sèche, A' étant de préférence choisi dans le groupe formé des éléments Sr, Ca, Mg, Pb, Ba, La, Ce et leurs mélanges, de préférence choisi dans le groupe formé des éléments Sr, Ca, Pb, Ba et leurs mélanges; et B' étant de préférence choisi dans le groupe formé des éléments Ti, Zr, Hf, Sn, Mn et leurs mélanges, de préférence choisi dans le groupe formé des éléments Ti, Zr et leurs mélanges, de préférence ledit pérovskite est $(Pb(Zr, Ti)O_3$ et $(Ca, Ba, Sr)TiO_3$, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un trente huitième mode de réalisation, le matériau céramique est un feldspath et forme le complément à 100% de la composition de la matière sèche, de préférence de formule $XO.Al_2O_3.2SiO_2$, avec X choisi dans le groupe formé des éléments de la colonne 2 (alcalino-terreux) du tableau périodique et de leurs mélanges, de préférence avec X choisi dans le groupe formé des éléments Mg, Ca, Sr et leurs mélanges, et/ou un feldspath de formule $X'_2O.Al_2O_3.2SiO_2$, avec X' choisi dans le groupe formé des éléments de la colonne 1 (alcalins) du tableau périodique des éléments et leurs mélanges, de préférence avec X' choisi dans le groupe formé des éléments Na, K et leurs mélanges et/ou un feldspath de formule $Z_2O_3.Al_2O_3.2SiO_2$, avec Z choisi dans le groupe formé des terres rares, de préférence $La_2O_3.Al_2O_3.(5/2)SiO_2$, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un trente neuvième mode de réalisation, le matériau céramique est une cordiérite et forme le complément à 100% de la composition de la matière sèche, de préférence de formule $XO.Al_2O_3.(5/2)SiO_2$, avec X choisi dans le groupe formé des éléments de la colonne 2 (alcalino-terreux) du tableau périodique et de leurs mélanges, de préférence avec X choisi dans le groupe formé des éléments Mg, Ca et leurs mélanges, et/ou une cordiérite de formule $X'_2O.Al_2O_3.(5/2)SiO_2$, avec X' choisi dans le groupe formé des éléments de la colonne 1 (alcalins) du tableau périodique des éléments et leurs mélanges, de préférence avec X' choisi dans le groupe formé des éléments Na, K et leurs mélanges et/ou une cordiérite de formule $Z_2O_3.Al_2O_3.(5/2)SiO_2$, avec Z choisi dans le groupe formé des terres rares et leurs mélanges, de préférence $La_2O_3.Al_2O_3.2SiO_2$, la teneur en premier liant est comprise entre 2,5% et 4% en pourcentages en masse sur la base de la matière sèche, la teneur en impuretés est inférieure à 1%, de préférence inférieure à 0,5%, de préférence inférieure à 0,1%, en pourcentages en masse sur la base de la matière sèche, et la teneur en humidité résiduelle est comprise entre 0,2 et 1%, de préférence comprise entre 0,2% et 0,6%, en pourcentages en masse sur la base de la poudre humide.

Dans un quarante et unième mode de réalisation, la teneur en liant additionnel est comprise entre 0,5% et 1%, en pourcentage en masse sur la base de la matière sèche. Ce mode de réalisation peut entre être combiné à l'un quelconque des modes de réalisation précédemment cités.

Dans un quarante deuxième mode de réalisation, la teneur en additif temporaire est comprise entre 0,5% et 1%, en pourcentage en masse sur la base de la matière sèche. Ce mode de réalisation peut entre être combiné à l'un quelconque des modes de réalisation précédemment cités.

De préférence, une poudre selon l'invention est fabriquée par atomisation d'une barbotine, de préférence suivant un procédé comportant les étapes a) à d) décrit ci-après.

Un tel procédé permet avantageusement de fabriquer des granules présentant une masse volumique relative inférieure à 60 %, voire inférieure à 50 %.

L'invention concerne également un procédé de fabrication d'une pièce frittée comportant les étapes suivantes :

A) mélange de matières premières pour former une charge de départ,
B) mise en forme de ladite charge de départ de manière à obtenir une préforme,
C) optionnellement, usinage de ladite préforme,

D) frittage de ladite préforme de manière à obtenir ladite pièce frittée,

E) optionnellement, usinage et/ou rectification de ladite pièce frittée,

ce procédé étant remarquable en ce que la charge de départ comporte une poudre de granules conforme à l'invention.

L'invention concerne également une préforme obtenue par la mise en oeuvre d'un procédé comportant au moins les étapes A) et B), voire C), d'un procédé de fabrication selon l'invention.

L'invention concerne également une pièce frittée céramique obtenue par frittage d'une préforme, éventuellement usinée, selon l'invention. En particulier, toutes les dimensions de la pièce frittée peuvent être supérieures à 2 cm.

**Définitions**

- Par « matériau céramique », on entend un matériau inorganique non métallique.
- Par « liant », on entend un constituant qui, en une quantité adaptée, permet, lors d'une opération de granulation, de former des granules présentant, après séchage, une cohésion autorisant leur manipulation, par exemple leur transvasement d'un récipient à un autre ou leur versement dans un moule (notamment dans des conditions industrielles), sans rupture. De préférence, cette cohésion est au moins celle obtenue avec un liant polymère. L'opération de granulation n'est pas limitative et comprend notamment l'atomisation ou la mise en oeuvre d'un granulateur. L'invention n'est donc pas limitée à des granules fabriqués par atomisation.
- Par "additif de frittage" d'un matériau céramique, on entend classiquement un constituant facilitant le frittage dudit matériau céramique, par exemple en réduisant la température nécessaire audit frittage, en améliorant la densification ou en limitant la croissance cristalline.
- Par « additif temporaire », on entend un constituant qui peut être éliminé lorsque qu'il est soumis à une température supérieure ou égale à 1000°C, par exemple lors d'une opération de frittage à une température supérieure ou égale à 1000°C.
- Un précurseur d'un constituant est un composé capable, lors d'un frittage d'une préforme obtenue à partir d'une poudre selon l'invention, de conduire à ce constituant. Le remplacement d'un constituant par une quantité « équivalente » d'un précurseur de ce constituant ne modifie pas les quantités dudit constituant dans le produit fritté obtenu par frittage d'une poudre selon l'invention.
- Par « impuretés», on entend les constituants inévitables, introduits involontairement et nécessairement avec les matières premières ou résultant de réactions avec ces constituants. Les impuretés ne sont pas des constituants nécessaires, mais seulement tolérés.
- Par «granule », on entend un agglomérat de particules, ledit agglomérat présentant un indice de sphéricité supérieur à 0,6, c'est-à-dire se présentant sous une forme sensiblement sphérique.
- Par « indice de sphéricité » d'un granule, on entend le rapport entre son plus petit diamètre et son plus grand diamètre, les diamètres étant mesurés sur des clichés réalisés par exemple par microscopie optique à un grossissement de x 10.
- Par « masse volumique non tassée » d'une poudre de granules, on entend le rapport égal à la masse d'un volume connu de ladite poudre divisée par ledit volume, le volume étant rempli par chute libre de la poudre, en évitant les vibrations. La masse volumique non tassée est déterminée suivant la norme NF EN 725-9 et est exprimée en $g/cm^3$.
- Par « masse volumique absolue » d'une poudre de granules, on entend classiquement le rapport égal à la masse de matière sèche de ladite poudre après un broyage à une finesse telle qu'il ne demeure sensiblement aucun pore fermé, divisée par le volume de cette masse après broyage. Elle peut être mesurée par pycnométrie à hélium.
- Par « masse volumique non tassée relative » d'une poudre de granules, on entend le rapport égal à la masse volumique non tassée divisée par la masse volumique absolue, exprimée en pourcentage.
- Par « masse volumique réelle » d'une poudre de granules, on entend la moyenne des masses volumiques apparentes de chaque granule de cette poudre.
- Par « masse volumique apparente » d'un granule, on entend classiquement le rapport égal à la masse du granule divisée par le volume qu'occupe ledit granule.
- Par « masse volumique relative » d'une poudre de granules, on entend le rapport égal à la masse volumique réelle divisée par la masse volumique absolue, exprimé en pourcentage.
- Par « température de transition vitreuse » d'un liant, on entend classiquement le milieu de l'intervalle de températures, dit « domaine de transition », dans lequel ledit liant devient progressivement plus visqueux et passe de l'état liquide à l'état solide. La température de transition vitreuse peut être déterminée par analyse calorimétrique différentielle (DSC). Une liste des températures de transition vitreuse des principales familles de polymères est donnée dans l'ouvrage Polymer Handbook (4th Edition) 1999; 2005 John Wiley & Sons. L'amplitude d'un domaine de transition est classiquement d'environ 5 à 10 °C.

- Les percentiles ou « centiles » 10 ($D_{10}$), 50 ($D_{50}$) et 90 ($D_{90}$) d'une poudre sont les tailles de particules correspondant aux pourcentages, en masse, de 10%, 50% et 90% respectivement, sur la courbe de distribution granulométrique cumulée des tailles de particules de la poudre, les tailles de particules étant classées par ordre croissant. Par exemple, 10%, en masse, des granules d'une poudre ont une taille inférieure à $D_{10}$ et 90% des granules en masse ont une taille supérieure à $D_{10}$. Les tailles et les percentiles peuvent être déterminés à l'aide d'une distribution granulométrique réalisée à l'aide d'un granulomètre laser. Le percentile 50 $D_{50}$ est encore classiquement appelé « diamètre médian ».

- Par « constituant organique », on entend classiquement un constituant ne contenant que les éléments carbone, oxygène, azote et hydrogène.

- Dans une source de particules de zircone, $HfO_2$ n'est pas chimiquement dissociable de $ZrO_2$. « $ZrO_2$ » désigne donc classiquement la teneur totale de ces deux oxydes. Selon la présente invention, $HfO_2$ n'est pas ajouté volontairement dans la charge de départ. $HfO_2$ ne désigne donc que les traces d'oxyde d'hafnium, cet oxyde étant toujours naturellement présent dans les sources de zircone à des teneurs généralement inférieures à 5%, voire inférieures à 2%. Par souci de clarté, on peut donc désigner indifféremment la teneur en zircone et en traces d'oxyde d'hafnium par « $ZrO_2$+$HfO_2$ » ou par « $ZrO_2$ », on encore par « teneur en zircone ».

Par « comportant un », il y a lieu de comprendre "comportant au moins un", sauf indication contraire.

"Un premier liant" (ou "un liant additionnel ») ne correspond pas nécessairement à un unique composé, mais peut correspondre à un mélange de plusieurs composés présentant chacun une température de transition vitreuse inférieure ou égale à 25°C (ou supérieure à 25°C, respectivement). De même, un « stabilisant », « un matériau céramique » ou un « additif temporaire » peuvent correspondre à des mélanges de plusieurs composés constituant chacun un matériau céramique, un stabilisant ou un additif temporaire, respectivement.

Sauf indication contraire, tous les pourcentages sont fournis sur la base de la masse de la poudre sèche, à l'exception des pourcentages relatifs aux stabilisants. La teneur en stabilisant d'un oxyde est en effet classiquement définie, par défaut, en pourcentages massiques sur la base de la teneur totale dudit oxyde et dudit stabilisant.

Lorsqu'il est fait référence à une colonne pour identifier des éléments, il est implicitement fait référence à une colonne du tableau périodique des éléments.

Les propriétés de la poudre peuvent être évaluées par les méthodes de caractérisation mises en oeuvre pour les exemples.

## Description détaillée

Une poudre de granules selon l'invention peut être fabriquée par un procédé comportant une étape d'atomisation d'une barbotine. Un tel procédé peut notamment comprendre les étapes suivantes :

a) réalisation d'une barbotine par la mise en suspension dans un liquide, de préférence dans de l'eau, des différentes matières premières nécessaires pour obtenir, à l'issue de l'étape b), une poudre de granules selon l'invention ;
b) atomisation de ladite barbotine de manière à former des granules ;
c) optionnellement, tamisage des granules obtenus à l'étape b) ;
d) optionnellement, séchage des granules obtenus à l'étape b) ou c).

A l'étape a), les matières premières sont mélangées dans un liquide, par exemple de l'eau distillée, de manière à former une barbotine.

Dans la barbotine, la teneur massique en matière sèche peut être comprise entre 35 et 70%. La teneur en matière sèche dans la barbotine est ajustée de manière que la masse volumique relative des granules obtenus à l'issue de l'étape b) soit comprise entre 30% et 60%. Une augmentation de cette teneur s'accompagne généralement d'une augmentation de la masse volumique relative des granules obtenus en fin d'étape b).

Les liants sont des constituants de la charge de départ qui rendent possible l'agglomération lors de l'atomisation.

Classiquement, la fabrication de granules met en oeuvre des liants du type APV ("PVA" en anglais) ou PEG, les liants de type APV ou les PEG ayant un poids moléculaire supérieur à 600 Da ne présentent pas une température de transition vitreuse (Tg) inférieure ou égale à 25°C. Les inventeurs ont découvert que la présence d'un liant présentant une température de transition vitreuse (Tg) inférieure ou égale à 25°C, ou "premier liant", favorise la déformation des granules lors du pressage et réduit le nombre de défauts. Elle conduit ainsi à une amélioration des propriétés mécaniques de la pièce frittée obtenue à partir de la poudre selon l'invention.

Une teneur en premier liant inférieure à 1% ne conduit cependant pas à un effet quantifiable. De préférence, le premier liant présente une température de transition vitreuse supérieure à -30°C, de préférence supérieure à -20°C, voire supérieure à -15 °C.

Le premier liant peut être choisi parmi les polymères. Une liste de tels polymères est divulguée dans « Polymer Handbook (4th Edition) », 1999; 2005 John Wiley & Sons. De préférence, le premier liant est choisi parmi les polymères organiques amorphes et leurs mélanges. De préférence, le premier liant est choisi parmi les polymères à base d'acrylates (monomère - ($CH_2$=CHCOO-)-), purs ou sous forme de co-polymères (avec des monomères styrènes par exemple) et leurs mélanges. Le polymère peut ainsi être une résine acrylique. De préférence, le premier liant est choisi parmi les polymères à base d'acrylates purs (monomère - ($CH_2$=CHCOO-)-), les co-polymères à base d'acrylates (monomère -($CH_2$=CHCOO-)-) et de styrène (monomère -(CsHs)) et leurs mélanges.

De préférence, le premier liant est choisi parmi les polymères organiques présentant après durcissement une résistance à la rupture supérieure à 1 N/mm$^2$, voire supérieure à 5 N/mm$^2$, mesurée suivant la norme DIN53455.

De préférence toujours, le premier liant est choisi parmi les polymères organiques présentant après durcissement une élongation à la rupture supérieure à 100%, de préférence supérieure à 200%, voire supérieure à 500%, mesurée suivant la norme DIN53455.

De préférence, le premier liant est choisi parmi les polymères ne contenant pas d'éléments inorganiques, en particulier les éléments de la colonne 1, et notamment le lithium (Li), le sodium (Na) et le potassium (K), ainsi que les éléments de la colonne 17, et notamment le fluor (F), le chlore (Cl), le brome (Br), l'iode (I). Avantageusement, la teneur en impuretés est réduite et la résistance mécanique des pièces frittées réalisées à partir des poudres de granules selon l'invention est accrue.

De préférence, la teneur en premier liant est déterminée de manière à être supérieure à 2%, de préférence supérieure à 2,5% et/ou inférieure à 8%, de préférence inférieure à 6%, de préférence inférieure à 5%, de préférence inférieure à 4% dans la poudre fabriquée.

Le liant additionnel est de préférence choisi parmi les polymères présentant une température de transition vitreuse supérieure à 25°C et inférieure à 100°C, de préférence inférieure à 80°C, de préférence inférieure à 50°C, voire inférieure à 40°C, et leurs mélanges.

De préférence, la teneur en liant additionnel est inférieure à 3%, de préférence encore inférieure à 2%, de préférence encore inférieure à 1% et/ou supérieure à 0,5%.

De préférence, le liant additionnel est un polymère ne contenant pas d'éléments inorganiques, en particulier les éléments des colonnes 1 et 17. Avantageusement la teneur en impuretés est réduite et la résistance mécanique des pièces réalisées à partir des granules selon l'invention est accrue.

De préférence, le liant additionnel est choisi parmi les polymères organiques amorphes et leurs mélanges. De préférence, le liant additionnel est choisi parmi les composés à base d'alcools. De préférence, le liant additionnel est choisi par les alcools polyvinyliques et les polyalkylènes glycols, de préférence choisi par les polyéthylènes glycols de poids moléculaire supérieur à 600 Da.

Un additif temporaire peut être ajouté lors de la fabrication des granules.

L'additif temporaire est de préférence un additif organique, qui, selon des règles bien connues de l'homme du métier, peut être notamment ajouté pour faciliter la fabrication des granules ou leur mise en forme.

La teneur en additif temporaire est de préférence supérieure à 0,5% et/ou inférieure à 1%, la teneur totale de liant(s) et d'additif temporaire étant de préférence inférieure à 8%, de préférence inférieure à 6%, de préférence inférieure à 5%, voire inférieure à 4%, en pourcentage en masse sur la base de la matière sèche. De préférence, l'additif organique est choisi parmi les dispersants ou tensio-actifs, les épaississants, les anti-moussants, les conservateurs ou biocides, les lubrifiants, et leurs mélanges. A titre d'exemples, les dispersants ou tensio-actifs peuvent être des polyacrylates ou des surfactants ioniques ou non-ioniques, de la famille des DOLAPIX commercialisés par Zschimmer-Schwarz ou encore des DARVAN ou acides méthacryliques commercialisés par R.T. Vanderbilt Company. Les épaississants peuvent être des émulsions d'acides acryliques commercialisées par Zschimmer-Schwarz ou par BASF. Les anti-moussants peuvent être ceux de la gamme commercialisée par Zschimmer-Schwarz. Les conservateurs ou biocides peuvent être des sels d'ammonium quaternaires commercialisés par Zschimmer-Schwarz ou BASF. Les lubrifiants peuvent être ceux de la gamme commercialisée par Zschimmer-Schwarz.

De préférence, la pureté des matières premières est déterminée de manière que la teneur en impuretés d'une poudre de granules selon l'invention est inférieure à 1%, de préférence inférieure à 0,5%, voire inférieure à 0,3%, voire inférieure à 0,1%.

Un additif de frittage du matériau céramique peut être ajouté lors de la fabrication des granules de manière à garantir que les granules contiennent dudit additif de frittage.

Dans un premier mode de réalisation particulier, le matériau céramique est le nitrure d'aluminium et l'additif de frittage est de préférence choisi dans le groupe formé des oxydes de terres rares, des éléments des colonnes 2, 3 et 4 du tableau périodique des éléments, et de leurs mélanges ; et des nitrures de terres rares, des éléments des colonnes 2, 3 et 4 du tableau périodique des éléments, et de leurs mélanges ; de préférence ledit additif de frittage est choisi dans le groupe formé de $Y_2O_3$ et des nitrures des éléments Mg, Ca, Ti, Zr, Si, B et leurs mélanges, de préférence ledit additif de frittage est choisi dans le groupe formé de $Y_2O_3$ et des nitrures des éléments Ti, Si, B et leurs mélanges. De préférence, la teneur en ledit additif de frittage est comprise entre 0,5% et 5%.

Dans un deuxième mode de réalisation particulier, le matériau céramique est le nitrure de bore (BN) et l'additif de frittage est de préférence choisi dans le groupe formé de LaB6 et/ou des oxydes de terres rares, des éléments des colonnes 2, 3 et 4 du tableau périodique des éléments et/ou des nitrures de terres rares, des éléments des colonnes 2, 3 et 4 du tableau périodique des éléments, et leurs mélanges ; de préférence ledit additif de frittage est choisi dans le groupe formé de LaB6, de $Y_2O_3$ et des nitrures des éléments Mg, Ca, Ti, Zr, Si, Al et leurs mélanges, de préférence ledit additif de frittage est choisi dans le groupe formé de LaB6, de $Y_2O_3$ et des nitrures des éléments Ti, Si, Al et leurs mélanges. De préférence, la teneur en ledit additif de frittage est comprise entre 0,5% et 5%.

Dans un troisième mode de réalisation particulier, le matériau céramique est le nitrure de silicium ($Si_3N_4$) et l'additif de frittage est de préférence choisi dans le groupe formé des oxydes de terres rares, des éléments des colonnes 2, 3 et 4 du tableau périodique des éléments, et de leurs mélanges et des nitrures de terres rares, des éléments des colonnes 2, 3 et 4 du tableau périodique des éléments, et de leurs mélanges ; de préférence ledit additif de frittage est choisi dans le groupe formé de MgO, d'$Al_2O_3$, de $Y_2O_3$, des nitrures des éléments Mg, Ca, Ti, Zr, Al, B et leurs mélanges, de préférence ledit additif de frittage est choisi dans le groupe formé de MgO, d'$Al_2O_3$, de $Y_2O_3$, des nitrures des éléments Ti, Al, B et leurs mélanges. De préférence, la teneur en ledit additif de frittage est comprise entre 0,5% et 15%, de préférence comprise entre 0,5% et 5%.

Dans un quatrième mode de réalisation particulier, le matériau céramique est le nitrure de titane (TiN) et l'additif de frittage est de préférence choisi dans le groupe formé des oxydes de terres rares, des éléments des colonnes 2, 3 et 4 du tableau périodique des éléments, et de leurs mélanges ; et des nitrures de terres rares, des éléments des colonnes 2, 3 et 4 du tableau périodique des éléments, et de leurs mélanges ; de préférence ledit additif de frittage est choisi dans le groupe des nitrures des éléments Mg, Ca, Zr, Al, Si, B et leurs mélanges, de préférence ledit additif de frittage est choisi dans le groupe des nitrures des éléments Al, Si, B et leurs mélanges. De préférence, la teneur en ledit additif de frittage est comprise entre 0,5% et 5%.

Dans un cinquième mode de réalisation particulier, le matériau céramique est le carbure de titane (TiC) et l'additif de frittage est de préférence choisi dans le groupe formé des oxydes des éléments Si, Al, B, des terres rares, des éléments des colonnes 2, 3 et 4 du tableau périodique des éléments, et de leurs mélanges ; des nitrures des éléments Si, Al, B, des terres rares, des éléments des colonnes 2, 3 et 4 du tableau périodique des éléments, et de leurs mélanges ; et des carbures des éléments Si, Al, B, des terres rares, des éléments des colonnes 2, 3 et 4 du tableau périodique des éléments, et leurs mélanges ; de préférence ledit additif de frittage est choisi dans le groupe des carbures des éléments Si, Al, B, Zr et leurs mélanges. De préférence, la teneur en ledit additif de frittage est comprise entre 0,5% et 5%.

Dans un sixième mode de réalisation particulier, le matériau céramique est le carbure de silicium et l'additif de frittage est de préférence choisi dans le groupe formé des oxydes des éléments Si, Al, B, des terres rares, des éléments des colonnes 2, 3 et 4 du tableau périodique des éléments, et de leurs mélanges ; des nitrures des éléments Si, Al, B, des terres rares, des éléments des colonnes 2, 3 et 4 du tableau périodique des éléments, et de leurs mélanges ; et des carbures des éléments Si, Al, B, des terres rares, des éléments des colonnes 2, 3 et 4 du tableau périodique des éléments, et leurs mélanges ; de préférence ledit additif de frittage est choisi dans le groupe formé de $Al_2O_3$, $Y_2O_3$, $SiO_2$, des carbures des éléments Al, B, Ti, Zr et leurs mélanges. De préférence, la teneur en ledit additif de frittage est comprise entre 0,5% et 5%.

Dans un septième mode de réalisation particulier, le matériau céramique est le carbure de bore et l'additif de frittage est de préférence choisi dans le groupe formé des oxydes des éléments Si, Al, B, des terres rares, des éléments des colonnes 2, 3 et 4 du tableau périodique des éléments, et de leurs mélanges ;: des nitrures des éléments Si, Al, B, des terres rares, des éléments des colonnes 2, 3 et 4 du tableau périodique des éléments, et de leurs mélanges, et des carbures des éléments Si, Al, B, des terres rares, des éléments des colonnes 2, 3 et 4 du tableau périodique des éléments, et leurs mélanges ; de préférence ledit additif de frittage est choisi dans le groupe des carbures des éléments Si, Al, Ti, Zr et leurs mélanges. De préférence, la teneur en ledit additif de frittage est comprise entre 0,5% et 5%.

Dans un huitième mode de réalisation particulier, le matériau céramique est le carbure de zirconium et l'additif de frittage est de préférence choisi dans le groupe formé des oxydes des éléments Si, Al, B, des terres rares, des éléments des colonnes 2, 3 et 4 du tableau périodique des éléments, et de leurs mélanges ; des nitrures des éléments Si, Al, B, des terres rares, des éléments des colonnes 2, 3 et 4 du tableau périodique des éléments, et de leurs mélanges ; et des carbures des éléments Si, Al, B, des terres rares, des éléments des colonnes 2, 3 et 4 du tableau périodique des éléments, et leurs mélanges ; de préférence ledit additif de frittage est choisi dans le groupe des carbures des éléments Si, Al, Ti, B et leurs mélanges. De préférence, la teneur en ledit additif de frittage est comprise entre 0,5% et 5%.

Dans un neuvième mode de réalisation particulier, le matériau céramique est l'alumine et l'additif de frittage est de préférence choisi dans le groupe formé des oxydes des éléments Si, des terres rares, des éléments des colonnes 1, 2, 3 et 4 du tableau périodique des éléments, et leurs mélanges ; de préférence ledit additif de frittage est choisi dans le groupe formé par MgO, CaO, BaO, $Na_2O$, $K_2O$, $Y_2O_3$, $TiO_2$, $ZrO_2$ et leurs mélanges, de préférence ledit additif est choisi dans le groupe formé de MgO, $Y_2O_3$, $TiO_2$, $ZrO_2$ et leurs mélanges. De préférence, la teneur en ledit additif de frittage est comprise entre 0,02% et 15%, de préférence comprise entre 0,02% et 1%.

Dans un douzième mode de réalisation particulier, le matériau céramique est l'oxyde d'yttrium et l'additif de frittage est de préférence choisi dans le groupe formé des oxydes des terres rares, des oxydes des éléments des colonnes 2, 3 et 4 du tableau périodique des éléments, de $SiO_2$, de $Al_2O_3$, et leurs mélanges; de préférence ledit additif de frittage est choisi dans le groupe formé par $Al_2O_3$, $ZrO_2$ et leurs mélanges. De préférence, la teneur en ledit additif de frittage est comprise entre 0,1% et 5%.

La teneur en additif de frittage du matériau céramique est de préférence supérieure à 0,02%, de préférence supérieure à 0,1%, voire supérieure à 0,5% et/ou inférieure à 10%, voire inférieure à 5%, voire inférieure à 4%, voire inférieure à 3%, voire inférieure à 2%, voire inférieure à 1%, en pourcentage en masse sur la base de la matière sèche.

Les poudres d'additif de frittage peuvent également être remplacées, au moins partiellement, par des poudres de précurseurs de ces additifs de frittage, introduits dans des quantités équivalentes.

Dans un mode de réalisation particulier, les granules ne contiennent pas d'additif de frittage.

De préférence, les matières premières sont choisies de manière que les granules ne contiennent aucun autre constituant que le matériau céramique, les liants, l'additif temporaire, l'additif de frittage, l'humidité résiduelle et les impuretés.

De préférence, les poudres du matériau céramique et d'additif de frittage sont introduites avant le(s) liant(s) et l'additif temporaire optionnel.

Chacune des différentes matières premières des granules, en particulier chacune des poudres de matériau céramique, présente de préférence un diamètre médian inférieur à 50 $\mu$m, de préférence inférieur à 20 $\mu$m, de préférence inférieur à 10 $\mu$m, et/ou une aire spécifique de préférence inférieure à 30 m$^2$/g, de préférence inférieure à 20 m$^2$/g.

En fin d'étape a), la matière sèche de la barbotine préparée présente de préférence un diamètre médian inférieur à 1 $\mu$m, de préférence inférieur à 0,5 $\mu$m, de préférence encore inférieur à 0,3 $\mu$m et une aire spécifique supérieure à 5 m$^2$/g, de préférence supérieure à 6 m$^2$/g et/ou inférieure à 30 m$^2$/g, de préférence inférieure à 20 m$^2$/g.

A cet effet, en particulier si les matières premières ne présentent pas un diamètre médian et/ou une aire spécifique adaptés, la barbotine est de préférence dispersée ou broyée selon des méthodes bien connues de l'homme du métier, par exemple par passage de la barbotine dans un broyeur, de préférence un broyeur à attrition. Cette étape permet avantageusement d'obtenir une bonne homogénéité des différents composés de la poudre désirée en fin d'étape a). En particulier, cette étape conduit à une répartition sensiblement homogène du premier liant au sein des granules de la poudre.

Si l'étape a) contient une opération de broyage, le liant additionnel et l'additif temporaire optionnels, ainsi que le premier liant sont, de préférence, introduits après cette étape.

**A l'étape b),** l'atomisation conduit à des particules présentant une masse volumique relative faible, comprise entre 30 et 60%, à la différence des procédés comme la granulation par roulage, « rolling granulation » en anglais, ou le « coulage en goutte », « drip casting » en anglais, qui classiquement conduisent à des masses volumiques relatives élevées.

De préférence l'atomisation est effectuée de manière que les granules contiennent de l'humidité résiduelle, la teneur en humidité étant de préférence inférieure 1%, de préférence inférieure à 0,6%, et/ou supérieure à 0,2%, en pourcentage en masse sur la base de la poudre humide. Avantageusement, une teneur en humidité résiduelle supérieure à 0,2% contribue à la déformation des granules sous l'effet de la pression. Une teneur en humidité résiduelle supérieure à 1% peut cependant entraîner une augmentation du nombre de défauts en surface des préformes fabriquées par pressage à partir d'une poudre de granules selon l'invention, par exemple suite à un collage desdites préformes sur les parois des moules utilisés pour le pressage.

Plus de 80%, de préférence plus de 90% en nombre des granules présentent un indice de sphéricité supérieur à 0,6, de préférence supérieur à 0,7, de préférence supérieur à 0,8, de préférence supérieur à 0,9.

**A l'étape c),** le tamisage optionnel est de préférence effectué à l'aide de tamis d'ouverture inférieure à 500 $\mu$m, voire inférieure à 400 $\mu$m. Avantageusement, cette étape permet d'éliminer les plus gros granules ce qui peut être utile pour certaines applications.

**A l'étape d),** le séchage éventuel est de préférence effectué à une température comprise entre 80°C et 110°C, pendant une durée de préférence supérieure à 2 heures.

De préférence, le procédé ne contient pas d'étape d).

Les inventeurs ont constaté qu'une poudre selon l'invention peut présenter les propriétés suivantes :

- La masse volumique relative des granules est de préférence supérieure à 40% et/ou inférieure à 50%.
- La masse volumique non tassée relative de la poudre est supérieure 25% et/ou inférieure à 30%.
- La coulabilité de la poudre est supérieure à 1 g/s, de préférence supérieure à 1,5 g/s, de préférence supérieure à 2 g/s.

Ainsi, selon l'invention,
une poudre de granules de nitrure d'aluminium (AlN) peut présenter une masse volumique non tassée comprise entre 0,7 et 0,95 g/cm$^3$,
une poudre de granules de nitrure de bore (BN) peut présenter une masse volumique non tassée comprise entre 0,6 et 1,0 g/cm$^3$,

une poudre de granules de nitrure de silicium (Si$_3$N$_4$) peut présenter une masse volumique non tassée comprise entre 0,7 et 0,95 g/cm$^3$,

une poudre de granules de nitrure de titane (TiN) peut présenter une masse volumique non tassée comprise entre 0,7 et 0,95 g/cm$^3$,

une poudre de granules de carbure de titane (TiC) peut présenter une masse volumique non tassée comprise entre 1,2 et 1,5 g/cm$^3$,

une poudre de granules de carbure de silicium (SiC) peut présenter une masse volumique non tassée comprise entre 0,75 et 0,95 g/cm$^3$,

une poudre de carbure de bore (B$_4$C) peut présenter une masse volumique non tassée comprise entre 0,6 et 0,75 g/cm$^3$,

une poudre de granules de carbure de zirconium (ZrC) peut présenter une masse volumique non tassée comprise entre 1,65 et 2,0 g/cm$^3$,

une poudre de granules d'alumine (Al$_2$O$_3$) peut présenter une masse volumique non tassée comprise entre 1,0 et 1,2 g/cm$^3$,

une poudre de granules d'oxyde d'yttrium (Y$_2$O$_3$) peut présenter une masse volumique non tassée comprise entre 1,25 et 1,5 g/cm$^3$,

une poudre de granules d'oxyde de cérium dopé aux terres rares peut présenter une masse volumique non tassée comprise entre 1,65 et 2,0 g/cm$^3$,

une poudre de granules de spinelle MgAl$_2$O$_4$ peut présenter une masse volumique non tassée comprise entre 0,9 et 1,1 g/cm$^3$,

une poudre de grenat Y$_3$Al$_5$O$_{12}$ peut présenter une masse volumique non tassée comprise entre 1,1 et 1,35 g/cm$^3$,

une poudre de pérovskite Pb(Zr, Ti)O$_3$ peut présenter une masse volumique non tassée comprise entre 1,7 et 2,25 g/cm$^3$,

une poudre de feldspath peut présenter une masse volumique non tassée comprise entre 0,6 et 0,9 g/cm$^3$,

une poudre de cordiérite peut présenter une masse volumique non tassée comprise entre 0,6 et 0,9 g/cm$^3$.

Une poudre de granules selon l'invention peut être mise en oeuvre pour fabriquer une pièce frittée suivant les étapes A) à E).

L'étape A) peut comprendre les étapes a) et b), voire c) et/ou d).

La charge de départ peut être constituée d'une poudre de granules selon l'invention.

En variante, la charge de départ peut comporter une poudre de granules selon l'invention et une ou plusieurs autres poudres. De préférence, la poudre de granules selon l'invention représente au moins 60%, de préférence au moins 75%, de préférence au moins 90%, de préférence au moins 95% de la masse de la charge de départ.

A l'étape B), la mise en forme est de préférence réalisée par pressage, injection plastique ou par extrusion, de préférence par pressage. De préférence, le pressage est choisi parmi les techniques de pressage à froid et de pressage isostatique à froid.

Dans le cas d'une mise en forme par pressage, la charge de départ est versée dans un moule, puis soumise à une pression de préférence supérieure à 80 MPa et de préférence inférieure à 200 MPa, voire inférieure à 150 MPa, de manière à constituer une pièce crue, ou « préforme ». Les granules de la poudre selon l'invention se déforment efficacement sous l'effet de cette pression. La préforme peut alors être démoulée.

A l'étape C) optionnelle, la préforme peut être usinée, selon toute technique connue de l'homme du métier.

A l'étape D), la préforme est frittée, de préférence sous air, de préférence à pression atmosphérique ou sous pression (pressage à chaud (« Hot Pressing » en anglais) et/ou pressage isostatique à chaud (« Hot Isostatic Pressing » en anglais, ou HIP)) et à une température comprise entre 1000°C et 2200°C, de manière à constituer une pièce frittée.

Si la préforme est réalisée à partir d'une poudre de granules selon l'invention à base de nitrure d'aluminium (AlN), la température de frittage est de préférence comprise entre 1400°C et 1750°C, et l'atmosphère lors du frittage peut être de préférence inerte ou partiellement réductrice, de préférence une atmosphère sous azote.

Si la préforme est réalisée à partir d'une poudre de granules selon l'invention à base de nitrure de bore (BN), la température de frittage est de préférence comprise entre 1700°C et 2000°C, et l'atmosphère lors du frittage peut être de préférence inerte ou partiellement réductrice, de préférence une atmosphère sous azote.

Si la préforme est réalisée à partir d'une poudre de granules selon l'invention à base de nitrure de silicium (Si$_3$N$_4$), la température de frittage est de préférence comprise entre 1600°C et 1850°C, et l'atmosphère lors du frittage peut être de préférence inerte ou partiellement réductrice, de préférence une atmosphère sous azote, suivi optionnellement d'un frittage sous argon,

Si la préforme est réalisée à partir d'une poudre de granules selon l'invention à base de nitrure de titane (TiN), la température de frittage est de préférence comprise entre 1400°C et 1750°C, et l'atmosphère lors du frittage peut être de préférence inerte ou partiellement réductrice, de préférence une atmosphère sous azote.

Si la préforme est réalisée à partir d'une poudre de granules selon l'invention à base de carbure de titane (TiC) ou de carbure de silicium (SiC) ou de carbure de bore (B$_4$C) ou de carbure de zirconium (ZrC), la température de frittage est de préférence comprise entre 1800°C et 2200°C, et l'atmosphère lors du frittage peut être de préférence inerte ou partiellement réductrice, de préférence une atmosphère sous argon.

Si la préforme est réalisée à partir d'une poudre de granules selon l'invention à base d'alumine (Al$_2$O$_3$), la température de frittage est de préférence comprise entre 1250°C et 1700°C.

Si la préforme est réalisée à partir d'une poudre de granules selon l'invention à base d'oxyde d'yttrium (Y$_2$O$_3$), la température de frittage est de préférence comprise entre 1400°C et 1700°C.

Si la préforme est réalisée à partir d'une poudre de granules selon l'invention à base d'oxyde de cérium (CeO$_2$), la température de frittage est de préférence comprise entre 1300°C et 1500°C.

Si la préforme est réalisée à partir d'une poudre de granules selon l'invention à base de spinelle MgAl$_2$O$_4$ ou de grenat Y$_3$Al$_5$O$_{12}$, la température de frittage est de préférence comprise entre 1400°C et 1700°C.

Si la préforme est réalisée à partir d'une poudre de granules selon l'invention à base de pérovskite, la température de frittage est de préférence comprise entre 1000°C et 1400°C.

Si la préforme est réalisée à partir d'une poudre de granules selon l'invention à base de feldspath ou de cordiérite, la température de frittage est de préférence comprise entre 1200°C et 1500°C, ladite température de frittage étant inférieure à 1400°C pour les cordiérites de formule MgO.Al$_2$O$_3$.(5/2)SiO$_2$.

L'étape D) peut être un frittage réactif, notamment pour former les SiAlON et les AlON.

Les étapes B) et D) peuvent être réalisées en une seule étape, par exemple par un pressage à chaud.

A l'étape E) optionnelle, la pièce frittée peut être usinée, selon toute technique connue de l'homme du métier.

Les poudres de granules selon l'invention peuvent être utilisées dans différentes applications industrielles. Lesdites poudres peuvent être mises en oeuvre pour réaliser des préformes et/ou des pièces frittées qui seront utilisés dans les applications suivantes :

En ce qui concerne une poudre de granules de nitrure d'aluminium, les applications peuvent être notamment dans les domaines de l'opto-électronique, des substrats ou supports pour l'électronique ;

En ce qui concerne une poudre de granules de nitrure de bore, les applications peuvent être notamment dans les domaines des équipements destinés à être utilisés à hautes températures, notamment à des températures supérieures à 800°C, des outils de coupe ou des abrasifs ;

En ce qui concerne une poudre de granules de nitrure de silicium, les applications peuvent être notamment dans les domaines des céramiques structurales destinées aux hautes températures, notamment à des températures supérieures à 800°C, par exemple pour les turbines à gaz et les moteurs, des éléments de roulements, des outils de coupe ou de mise en forme ;

En ce qui concerne une poudre de granules de nitrure de titane, les applications peuvent être notamment dans les domaines des outils de coupe, des éléments décoratifs, des implants médicaux ;

En ce qui concerne une poudre de granules de carbure de titane, les applications peuvent être notamment dans les domaines des outils de coupe ;

En ce qui concerne une poudre de granules de carbure de silicium, les applications peuvent être réalisées entre autre dans les domaines des outils de coupe, des céramiques structurales, d'éléments pour les automobiles, comme les freins, des éléments de systèmes électriques, comme des paratonnerres, des lignes haute tension, des éléments chauffants, des éléments décoratifs;

En ce qui concerne une poudre de granules de carbure de bore, les applications peuvent être notamment dans les domaines des outils de coupe, des céramiques structurales, des abrasifs ;

En ce qui concerne une poudre de granules de carbure de zirconium, les applications peuvent être notamment dans les domaines des outils de coupe, des abrasifs, des éléments chauffants ;

En ce qui concerne une poudre de granules d'alumine, les applications peuvent être notamment dans les domaines des céramiques structurales, des abrasifs, des réfractaires, des éléments décoratifs, des matériaux transparents ;

En ce qui concerne une poudre de granules d'oxyde d'yttrium, les applications peuvent être notamment dans les domaines des éléments décoratifs, notamment des matériaux transparents ;

En ce qui concerne une poudre de granules d'oxyde de cérium, éventuellement dopé aux terres rares, les applications peuvent être notamment dans les domaines des piles à combustibles ;

En ce qui concerne une poudre de granules de spinelle MgAl$_2$O$_4$ ou de grenat Y$_3$Al$_5$O$_{12}$, les applications peuvent être notamment dans les domaines des céramiques décoratives, notamment transparentes ;

En ce qui concerne une poudre de granules de pérovskite, les applications peuvent être notamment dans les domaines des céramiques pour l'électronique, notamment les céramiques piézo-électriques ;

En ce qui concerne une poudre de granules de feldspath et de cordiérite, les applications peuvent être notamment dans les domaines des céramiques isolantes, des céramiques réfractaires, des gazetteries.

## Exemples

Les exemples non limitatifs suivants ont été fabriqués suivant un procédé comportant les étapes A) à E) ci-dessus.

L'étape A) présente les étapes a), b) et c) suivantes.

A l'étape a), pour chacun des exemples réalisés, la poudre d'alumine dont les principales caractéristiques figurent dans le tableau 1 ci-dessous est dispersée par microbroyage. La magnésie de cette poudre d'alumine sert avantageusement d'additif de frittage.

Tableau 1

| Poudre d'alumine alpha | |
| --- | --- |
| Al$_2$O$_3$ (% massique) | Complément à 100% |
| SiO$_2$ (ppm) | 20 |
| Na$_2$O (ppm) | 50 |
| CaO (ppm) | 20 |
| Fe$_2$O$_3$ (ppm) | 20 |
| MgO (ppm) | 500 |
| TiO$_2$ (ppm) | <20 |
| Aire spécifique (m$^2$/g) | 9 |
| D$_{10}$ ($\mu$m) | 0,2 |
| D$_{50}$ ($\mu$m) | 0,3 |
| D$_{90}$ ($\mu$m) | 0,9 |

Ce microbroyage est effectué dans un broyeur humide à billes (billes de zircone à 3 mol% d'Y$_2$O$_3$, de diamètre 0,8 mm) ou broyeur à attrition. Après le microbroyage, la poudre présente un diamètre médian égal à 0,3 $\mu$m. La teneur en matière sèche de la suspension est de 50% massique.

Les liants, sous la forme de solutions à 50% massique, sont ensuite ajoutés à la suspension.

La barbotine ainsi obtenue est maintenue sous agitation pendant 12 heures.

A l'étape b), la barbotine est ensuite atomisée sur un équipement FSD Minor commercialisé par la société GEA NIRO, avec une température en entrée de l'atomiseur de 280°C et une température en sortie de l'atomiseur de 100°C. A l'issue de l'étape b), une poudre de granules est obtenue.

A l'étape c), la poudre de granules est tamisée au tamis de 400 $\mu$m.

A l'étape B), et pour chacune des poudres de granules obtenues en fin d'étape A), les préformes suivantes ont été réalisées :

- des pastilles de diamètre 32 mm et de masse 8 grammes ont été réalisées par pressage uniaxial à une pression de 100 MPa pour la mesure de la masse volumique apparente,
- 10 barrettes présentant une section 4 $\times$ 5 cm$^2$ et une longueur de 10 cm ont été réalisées par pressage uniaxial à une pression de 100 MPa pour la mesure du rendement,
- des barrettes de section 1 $\times$ 1 cm$^2$ et de longueur 3 cm ont été réalisées par pressage uniaxial à une pression de 100 MPa pour la mesure de la flexion 3 points.

Les préformes ainsi obtenues n'ont pas subi d'étape C).

A l'étape D), lesdites préformes ont été frittées suivant le cycle suivant :

- montée en température à 500°C à 100°C/h,
- maintien à 500°C pendant 2 heures,
- montée en température jusqu'à 1500°C, à 100°C/h,
- maintien à 1500°C pendant 2 heures,
- descente en température par refroidissement naturel.

A l'étape E), les barrettes destinées aux mesures de flexion 3 points ont été usinées aux dimensions requises pour réaliser cette mesure ($25 \times 10 \times 3$ mm$^3$).

Les propriétés des exemples ont été évaluées suivant les méthodes de caractérisation suivantes :

- La matière sèche est mesurée après un séchage à 110°C pendant au moins deux heures.
- La coulabilité d'une poudre de granules est mesurée par un équipement de type « coupe Ford », selon la norme NF EN 658 -5. La mesure consiste à évaluer la durée nécessaire à 200 g de poudre pour couler à travers un entonnoir de diamètre interne 10 mm. La coulabilité de la poudre est ensuite calculée par le rapport égal à la masse de poudre divisée par la durée nécessaire à son écoulement au travers de l'entonnoir.
- La masse volumique non tassée d'une poudre de granules est mesurée par un équipement de type « coupe Ford », selon la norme NF EN 725-9. La mesure consiste à évaluer la masse de poudre de granules introduite après remplissage d'un récipient de dimensions standard. La masse volumique non tassée est ensuite calculée en donnant le rapport de la masse de poudre sur le volume du récipient.
- La masse volumique absolue d'une poudre de granules est mesurée par pycnométrie à hélium sur un équipement AccuPyc 1330 de Micromeretics®. La poudre de granules est préalablement calcinée à 500°C pendant 2 heures.
- La masse volumique réelle d'une poudre de granules est mesurée par porosimétrie au mercure sur un équipement Hg porosimeter AutoPores IV 9500 commercialisé par la société Micromeretics®. Une masse de 1 gramme de poudre de granules est introduite dans l'équipement. Après mise sous vide primaire pendant 5 minutes, le mercure est introduit par pas de 3447 Pa (soit 0,5 psi). La masse volumique réelle est calculée par :

$$ Masse\ volumique\ réelle = \frac{masse\ poudre}{Volume\ total - Volume\ Hg\ 100\ psi} $$

le volume total étant égal au volume à vide de la chambre de mesure et le volume Hg 100 psi étant le volume de mercure Hg introduit dans la chambre en présence de la poudre à une pression de 0,689 MPa (soit 100 psi).

- La masse volumique apparente d'une pièce frittée est mesurée sur des échantillons de diamètre 30 mm et d'épaisseur 3 mm, obtenus après pressage à 100 MPa de la poudre de granules selon l'exemple considéré, et frittés suivant le cycle suivant : montée à 500°C à une vitesse de 100°C/h, palier de 2 heures à 500°C, montée à 1500°C à une vitesse de 100°C/h, palier de 2 heures à 1500°C, descente à 500°C à une vitesse de 200°C/h, puis refroidissement libre.
- Le module de rupture est mesuré sur des barrettes $25 \times 10 \times 3$ mm$^3$ usinées dans des pièces obtenues par pressage à 100 MPa de la poudre de granules selon l'exemple considéré, et frittées suivant le cycle suivant : montée à 500°C à une vitesse de 100°C/h, palier de 2 heures à 500°C, montée à 1500°C à une vitesse de 100°C/h, palier de 2 heures à 1500°C, descente à 500°C à une vitesse de 200°C/h, puis refroidissement libre.
- Les répartitions granulométriques sont déterminées à l'aide d'un granulomètre laser Partica LA-950 commercialisé par la société HORIBA. La poudre de granules est directement introduite dans le granulomètre laser pour la mesure, sans mise en suspension.
- L'analyse chimique est déterminée par spectroscopie de fluorescence X pour les éléments dont la teneur est supérieure à 0,1% massique ; si la teneur en un élément est inférieure à 0,1% massique, elle est déterminée par ICP (Induction Coupled Plasma), sur un modèle Vista AX (commercialisé par la société Varian).
- L'indice de sphéricité est mesuré sur un équipement Morphologi 3G commercialisé par la société Malvern Instruments. La poudre de granules est directement introduite dans l'équipement pour mesure. L'indice de sphéricité d'un granule est déterminé par le rapport du plus petit diamètre sur le plus grand diamètre, mesurés sur un cliché du granule réalisé par microscopie optique à un grossissement de $\times 10$. Pour mesurer le pourcentage de granules présentant une sphéricité déterminée, on effectue un comptage statistique sur les granules observés sur 500 à 1000 clichés.
- Le module de rupture en flexion 3 points est mesuré suivant la norme NF EN 658 -5, sur une presse Lloyd, avec une distance entre appuis externes de 15 mm, sur des barrettes de longueur égale à 25 mm, de largeur égale à 10 mm et d'épaisseur égale à 3 mm.

- La nature et la teneur en additif temporaire et en liant(s), en particulier en polymères, sont mesurées par spectroscopie Infra-rouge sur un équipement Spectrum 400 commercialisé par Perkin Elmer. Les données d'intensité sont enregistrées sur un intervalle 4000-1000 cm$^{-1}$ avec un pas de 1 cm$^{-1}$. Les polymères sont identifiés par comparaison avec les données FTIR (spectroscopie infrarouge à transformée de Fourier, ou « Fourier Transformed InfraRed spectroscopy » en anglais) reportées par exemple dans l'ouvrage « Handbook of fourier transform Raman and infrared spectra of polymers », A. H. Kuptsov, German Nikolaevich Zhizhin, vol. 45, 1998, Elsevier. La nature et la teneur en polymères peuvent également être confirmées par d'autres méthodes bien connues telles que la chromatographie en phase liquide (HPLC) équipée de colonne(s) de séparation adaptée(s) à la nature et au nombre de composés à séparer. Un équipement tel que le Surveyor Plus commercialisé par Thermo Scientific, équipé d'une colonne Hypersil Gold de diamètre 1,9 $\mu$m peut être employé.

- La teneur totale en constituants temporaires est déterminée par la différence entre la masse de poudre après calcination à 1000°C et la masse de poudre après séchage à 110°C, ramenée à la masse totale après séchage.

- Le rendement de fabrication correspond au pourcentage de pièces frittées "conformes", c'est-à-dire ne présentant ni fissures, y compris dans leur coeur, ni défauts de surface, sur la base du nombre de pièces frittées fabriquées.

Tableau 2

| Exemple | 1 | 2 | 3 |
|---|---|---|---|
| **Analyse chimique des granules (% massique après séchage à 110°C pendant 2h)** | | | |
| $Al_2O_3$ | Complément à 100 | | |
| MgO | 0,05 | 0,05 | 0,05 |
| liants | 3 | 3 | 3 |
| Impuretés | < 0,1 | < 0,1 | < 0,1 |
| **Humidité résiduelle après séchage de 2 heures à 110°C, en pourcentage massique (sans séchage préalable)** | | | |
| | 0,4 | 0,4 | 0,4 |
| **Liants** | | | |
| Résine acrylique (Tg = 10°C) | 2,5 | | 2,5 |
| PEG 4000 (Tg = 35°C) | 0,5 | | 0,5 |
| PEG 20000 (Tg = 45°C) | | 1 | |
| APV hydrolysé à 95% (Tg = 70°C) | | 2 | |
| **Propriétés de la poudre de granules** | | | |
| $D_{10}$ ($\mu$m) | 30 | 70 | 70 |
| $D_{50}$ ($\mu$m) | 60 | 110 | 110 |
| $D_{90}$ ($\mu$m) | 100 | 200 | 200 |
| $D_{99.5}$ ($\mu$m) | 200 | 300 | 300 |
| Indice de sphéricité | > 0,8 | > 0,8 | > 0,8 |
| Masse volumique relative (%) | 40 | 50 | 40 |
| Masse volumique non tassée (g/cm$^3$) | 0,9 | 1,1 | 1,1 |
| Coulabilité (g/s) | 0,5 | 2 | 2 |
| **Propriétés de la pièce frittée obtenue après pressage des granules et frittage à 1500°C** | | | |
| Masse volumique apparente (g/cm$^3$) | 3,96 | 3,70 | 3,96 |
| Module de rupture en flexion 3 pts (MPa) | 380 | 340 | 380 |
| Rendement de fabrication (%) | 50 | 100 | 100 |

Les inventeurs considèrent que l'aptitude au remplissage d'un moule peut être évaluée par la masse volumique non tassée de la poudre et par sa coulabilité. Une masse volumique non tassée élevée et une valeur de coulabilité élevée correspondent à une bonne aptitude au remplissage d'un moule.

Le tableau 2 permet de faire les constats suivants :

La poudre de granules de l'exemple 1, utilisant les mêmes liants que la poudre de l'exemple 3 présente une masse volumique non tassée, ainsi qu'une valeur de coulabilité plus faibles. Son aptitude au remplissage d'un moule est moins élevée que celles des poudres des exemples 2 et 3. Le rendement de fabrication de pièces de dimensions 10 x 5 x 4 $cm^3$ (volume de 200 $cm^3$) est très inférieur à celui obtenu avec la poudre de granules de l'exemple 3, ce qui illustre l'importance d'un diamètre médian $D_{50}$ supérieur à 80 $\mu$m.

La poudre de granules de l'exemple 2 utilisant des liants ne présentant pas une température de transition vitreuse inférieure à 25°C ne permet pas, après pressage et frittage, d'obtenir une pièce frittée présentant une forte masse volumique et un module de rupture en flexion 3 points élevé.

La poudre de granules de l'exemple 3 selon l'invention permet la fabrication avec de forts rendements de pièces frittées de grand volume et présentant des propriétés mécaniques remarquables.

Bien entendu, l'invention n'est pas limitée aux modes de réalisation fournis à titre d'exemples.

En particulier, la masse volumique apparente d'une pièce frittée selon l'invention n'est pas limitative.

En outre, d'autres procédés que l'atomisation peuvent être mis en oeuvre pour fabriquer une poudre de granules selon l'invention, par exemple un procédé faisant intervenir une étape de lyophilisation, ou un procédé faisant intervenir une étape de granulation en lit fluidisé, ou une étape de granulation à l'aide d'un malaxeur à pales.

## Revendications

1. Poudre de granules destinée notamment à la fabrication de pièces frittées céramiques, ladite poudre présentant la composition chimique massique suivante, sur la base de la matière sèche :

   - un matériau céramique et optionnellement un stabilisant dudit matériau céramique : complément à 100% ;
   - au moins 1,0% d'un premier liant présentant une température de transition vitreuse inférieure à 15°C ;
   - 0 à 4,0% d'un liant additionnel présentant une température de transition vitreuse supérieure à 25°C ;
   - 0 à 4,0% d'un additif temporaire différent d'un premier liant et d'un liant additionnel, la teneur totale dudit premier liant, dudit liant additionnel et dudit additif temporaire étant inférieure à 9,0% ;
   - 0 à 15% d'un additif de frittage du matériau céramique ;
   - moins de 2,0% d'impuretés ;

   le diamètre médian $D_{50}$ de la poudre étant compris entre 80 et 130 $\mu$m, le percentile $D_{99,5}$ étant inférieur à 500 $\mu$m, le percentile 10 $D_{10}$ étant supérieur à 40 $\mu$m et la masse volumique relative des granules étant comprise entre 30% et 60%,
   le matériau céramique étant choisi dans le groupe formé par le nitrure d'aluminium, le nitrure de bore, le nitrure de silicium, le nitrure de titane, le carbure de titane, le carbure de silicium, le carbure de tungstène, le carbure de zirconium, l'alumine, l'oxyde d'yttrium, l'oxyde de cérium, l'oxyde de cérium dopé aux terres rares, l'oxyde de cérium dopé à la zircone, le spinelle $MgAl_2O_4$, les grenats, les pérovskites de formules A'B'O$_3$, les feldspaths, les cordiérites, et leurs mélanges.

2. Poudre selon la revendication précédente, dans laquelle :

   - pour l'oxyde de cérium dopé aux terres rares, ladite terre rare est choisie dans le groupe formé de $La_2O_3$, $Pr_2O_3$, $Sm_2O_3$, $Gd_2O_3$ et leurs mélanges, et/ou
   - pour les pérovskites de structure A'B'O$_3$, l'élément A' est choisi dans le groupe formé des éléments Sr, Ca, Pb, Ba et leurs mélanges ; et B' est choisi dans le groupe formé des éléments Ti, Zr et leurs mélanges, et/ou
   - les feldspaths sont choisis dans le groupe formé par les feldspaths de formule $XO.Al_2O_3.2SiO_2$, avec X choisi dans le groupe formé des éléments de la colonne 2 du tableau périodique et de leurs mélanges et/ou de formule $X'_2O.Al_2O_3.2SiO_2$, avec X' choisi dans le groupe formé des éléments de la colonne 1 du tableau périodique des éléments et leurs mélanges et/ou de formule $Z_2O_3.Al_2O_3.2SiO_2$, avec Z choisi dans le groupe formé des terres rares, et/ou
   - les cordiérites sont choisies dans le groupe formé par les cordiérites de formule $XO.Al_2O_3.(5/2)SiO_2$, avec X choisi dans le groupe formé des éléments de la colonne 2 du tableau périodique et leurs mélanges, par les cordiérites de formule $X'_2O.Al_2O_3.5/2SiO_2$, avec X' choisi dans le groupe formé des éléments de la colonne 1 du tableau périodique des éléments et leurs mélanges, par les cordiérites de formule $Z_2O_3.Al_2O_3.(5/2)SiO_2$, avec Z choisi dans le groupe formé des terres rares et leurs mélanges.

3. Poudre selon l'une quelconque des revendications précédentes, dans laquelle

- le matériau céramique est l'alumine $Al_2O_3$, et
- la teneur en premier liant est comprise entre 2,5% et 4%, en pourcentages en masse sur la base de la matière sèche, et
- la teneur en impuretés est inférieure à 1%, en pourcentages en masse sur la base de la matière sèche, et
- la teneur en humidité résiduelle est comprise entre 0,2 et 1%, en pourcentages en masse sur la base de la poudre humide,

ou dans laquelle

- le matériau céramique est l'alumine $Al_2O_3$, et
- la teneur en additif de frittage est comprise entre 0,02 et 15%, ledit additif de frittage étant choisi dans le groupe formé des oxydes des éléments Si, des terres rares, des éléments des colonnes 2, 3 et 4 du tableau périodique des éléments, et leurs mélanges, et
- la teneur en premier liant est comprise entre 2,5% et 4%, en pourcentages en masse sur la base de la matière sèche, et
- la teneur en impuretés est inférieure à 1%, en pourcentages en masse sur la base de la matière sèche, et
- la teneur en humidité résiduelle est comprise entre 0,2 et 1%, en pourcentages en masse sur la base de la poudre humide,

ou dans laquelle

- le matériau céramique est le carbure de silicium SiC, et
- la teneur en premier liant est comprise entre 2,5% et 4%, en pourcentages en masse sur la base de la matière sèche, et
- la teneur en impuretés est inférieure à 1%, en pourcentages en masse sur la base de la matière sèche, et
- la teneur en humidité résiduelle est comprise entre 0,2 et 1%, en pourcentages en masse sur la base de la poudre humide,

ou dans laquelle

- le matériau céramique est le carbure de silicium SiC, et
- la teneur en additif de frittage est comprise entre 0,5 et 5%, ledit additif de frittage étant choisi dans le groupe formé des oxydes des éléments Si, Al, B, des terres rares, des éléments des colonnes 2, 3 et 4 du tableau périodique des éléments, et de leurs mélanges ; des nitrures des éléments Si, Al, B, des terres rares, des éléments des colonnes 2, 3 et 4 du tableau périodique des éléments, et de leurs mélanges ; et des carbures des éléments Si, Al, B, des terres rares, des éléments des colonnes 2, 3 et 4 du tableau périodique des éléments, et de leurs mélanges, et
- la teneur en premier liant est comprise entre 2,5% et 4%, en pourcentages en masse sur la base de la matière sèche, et
- la teneur en impuretés est inférieure à 1%, en pourcentages en masse sur la base de la matière sèche, et
- la teneur en humidité résiduelle est comprise entre 0,2 et 1%, en pourcentages en masse sur la base de la poudre humide,

ou dans laquelle

- le matériau céramique est le nitrure de silicium $Si_3N_4$, et
- la teneur en premier liant est comprise entre 2,5% et 4%, en pourcentages en masse sur la base de la matière sèche, et
- la teneur en impuretés est inférieure à 1%, en pourcentages en masse sur la base de la matière sèche, et
- la teneur en humidité résiduelle est comprise entre 0,2 et 1%, en pourcentages en masse sur la base de la poudre humide,

ou dans laquelle

- le matériau céramique est le nitrure de silicium $Si_3N_4$, et
- la teneur en additif de frittage est comprise entre 0,5 et 15%, ledit additif de frittage étant choisi dans le groupe formé des oxydes de terres rares, des éléments des colonnes 2, 3 et 4 du tableau périodique des éléments, et de leurs mélanges ; et des nitrures de terres rares, des éléments des colonnes 2, 3 et 4 du tableau périodique des éléments, et de leurs mélanges, et

- la teneur en premier liant est comprise entre 2,5% et 4%, en pourcentages en masse sur la base de la matière sèche, et
- la teneur en impuretés est inférieure à 1%, en pourcentages en masse sur la base de la matière sèche, et
- la teneur en humidité résiduelle est comprise entre 0,2 et 1%, en pourcentages en masse sur la base de la poudre humide.

4. Poudre selon l'une quelconque des revendications précédentes, dans laquelle la teneur en liant additionnel est comprise entre 0,5% et 1%, en pourcentage en masse sur la base de la matière sèche,

ou dans laquelle

- la teneur en liant additionnel est comprise entre 0,5% et 1%, en pourcentage en masse sur la base de la matière sèche, et
- la teneur en additif temporaire est comprise entre 0,5% et 1%.

5. Poudre selon l'une quelconque des revendications précédentes, dans laquelle les granules incorporent des particules de matériau céramique dont le diamètre médian $D_{50}$ est inférieur à 1 $\mu$m.

6. Poudre selon l'une quelconque des revendications précédentes, dans laquelle le premier liant présente une température de transition vitreuse supérieure à -30°C.

7. Poudre selon l'une quelconque des revendications précédentes, dans laquelle le premier liant est choisi parmi les polymères organiques amorphes, les résines polyacryliques, les polymères à base d'acrylates purs, les co-polymères à base d'acrylates et de styrène, et leurs mélanges.

8. Poudre selon l'une quelconque des revendications précédentes, dans laquelle le premier liant et/ou le liant additionnel sont choisis parmi les polymères ne contenant pas d'éléments inorganiques.

9. Poudre selon l'une quelconque des revendications précédentes, dans laquelle ledit additif temporaire est un additif organique, la teneur dudit additif organique étant inférieure à 1%, la teneur totale en liant(s) et en additif organique étant inférieure à 5%, ledit additif organique étant choisi parmi les dispersants ou tensio-actifs, les épaississants, les anti-moussants, les conservateurs, les lubrifiants, et leurs mélanges.

10. Poudre selon l'une quelconque des revendications précédentes, dans laquelle

- le diamètre médian $D_{50}$ est supérieur à 90 $\mu$m et inférieur à 120 $\mu$m ; et/ou
- le percentile 10 $D_{10}$ est supérieur à 50 $\mu$m ; et/ou
- le percentile 90 $D_{90}$ est inférieur à 300 $\mu$m ; et/ou
- le percentile 99,5 $D_{99,5}$ est inférieur à 400 $\mu$m.

11. Poudre selon l'une quelconque des revendications précédentes, dans laquelle la teneur en humidité résiduelle est comprise entre 0,2 et 1%, en pourcentage en masse sur la base de la poudre humide.

12. Poudre selon l'une quelconque des revendications précédentes, dans laquelle la zircone, l'alumine, le premier liant, le liant additionnel et l'additif temporaire sont répartis de façon homogène au sein des granules de la poudre.

13. Poudre selon l'une quelconque des revendications précédentes, dans laquelle plus de 80 % des granules présentent ladite composition chimique.

14. Procédé de fabrication d'une pièce frittée comportant les étapes suivantes :

A) mélange de matières premières pour former une charge de départ comportant une poudre de granules selon l'une quelconque des revendications précédentes, ladite poudre de granules représentant au moins 60 % de la masse de la charge de départ,
B) mise en forme d'une préforme à partir de ladite charge de départ,
C) optionnellement usinage de ladite préforme,
D) frittage de ladite préforme de manière à obtenir ladite pièce frittée,
E) optionnellement, usinage et/ou rectification de ladite pièce frittée.

**Patentansprüche**

1. Granulatpulver, das insbesondere zur Herstellung von keramischen Sinterteilen bestimmt ist, wobei das Pulver die folgende chemische Zusammensetzung, bezogen auf das Trockengewicht, aufweist:

   - ein keramisches Material und gegebenenfalls einen Stabilisator für das keramische Material: Ergänzung auf 100 %;
   - mindestens 1,0 % eines ersten Bindemittels, das eine Glasübergangstemperatur von kleiner oder gleich 15 °C aufweist;
   - 0 bis 4,0 % eines zusätzlichen Bindemittels, das eine Glasübergangstemperatur von mehr als 25 °C aufweist;
   - 0 bis 4,0 % eines temporären Additivs, das sich von einem ersten Bindemittel und einem zusätzlichen Bindemittel unterscheidet, wobei der Gesamtgehalt an erstem Bindemittel, zusätzlichem Bindemittel und temporärem Additiv weniger als 9,0 % beträgt;
   - 0 bis 15 % eines Additivs zum Sintern des keramischen Materials;
   - weniger als 2,0 % Verunreinigungen;

   wobei der mittlere Durchmesser $D_{50}$ des Pulvers zwischen 80 und 130 $\mu$m liegt, wobei das Perzentil $D_{99,5}$ kleiner als 500 $\mu$m ist, wobei das Perzentil 10 $D_{10}$ größer als 40 $\mu$m ist und die relative Dichte des Granulats zwischen 30 % und 60 % liegt,

   wobei das keramische Material ausgewählt ist aus der Gruppe bestehend aus Aluminiumnitrid, Bornitrid, Siliziumnitrid, Titannitrid, Titancarbid, Siliziumcarbid, Wolframcarbid, Zirkoniumcarbid, Aluminiumoxid, Yttriumoxid, Ceroxid, mit Seltenerdmetallen dotiertem Ceroxid, mit Zirkonoxid dotiertem Ceroxid, Spinell $MgAl_2O_4$, Granaten, Perowskiten der Formeln A'B'O$_3$, Feldspathen, Cordieriten und Mischungen davon.

2. Pulver nach dem vorhergehenden Anspruch, wobei:

   - die Seltenerde für das mit Seltenerdmetallen dotierte Ceroxid ausgewählt ist aus der Gruppe bestehend aus $La_2O_3$, $Pr_2O_3$, $Sm_2O_3$, $Gd_2O_3$ und Mischungen davon und/oder
   - das Element A' für die Perovskite der Struktur A'B'O$_3$ ausgewählt ist aus der Gruppe bestehend aus den Elementen Sr, Ca, Pb, Ba und Mischungen davon; und B' ausgewählt ist aus der Gruppe bestehend aus den Elementen Ti, Zr und Mischungen davon, und/oder
   - die Feldspathe ausgewählt sind aus der Gruppe bestehend aus Feldspathen der Formel $XO.Al_2O_3.2SiO_2$, wobei X ausgewählt ist aus der Gruppe bestehend aus Elementen der Spalte 2 des Periodensystems der Elemente und Mischungen davon und/oder der Formel $X'_2O.Al_2O_3.2SiO_2$, wobei X' ausgewählt ist aus der Gruppe bestehend aus Elementen der Spalte 1 des Periodensystems der Elemente und Mischungen davon und/oder der Formel $Z_2O_3.Al_2O_3.2SiO_2$, wobei Z ausgewählt ist aus der Gruppe bestehend aus Seltenerden und/oder
   - die Cordierite ausgewählt sind aus der Gruppe bestehend aus Cordieriten der Formel $XO.Al_2O_3.(5/2)SiO_2$, wobei X ausgewählt ist aus der Gruppe bestehend aus Elementen der Spalte 2 des Periodensystems und Mischungen davon, aus den Cordieriten der Formel $X'_2O.Al_2O_3.5/2SiO_2$, wobei X' ausgewählt ist aus der Gruppe bestehend aus Elementen der Spalte 1 des Periodensystems der Elemente und Mischungen davon, den Cordieriten der Formel $Z_2O_3.Al_2O_3.(5/2)SiO_2$, wobei Z ausgewählt ist aus der Gruppe bestehend aus Seltenerden und Mischungen davon.

3. Pulver nach einem der vorhergehenden Ansprüche, wobei

   - das keramische Material Aluminiumoxid $Al_2O_3$ ist, und
   - der Gehalt an dem ersten Bindemittel zwischen 2,5 Gew.-% und 4 Gew.-%, bezogen auf das Trockengewicht, liegt und
   - der Gehalt an Verunreinigungen kleiner als 1 Gew.-%, bezogen auf das Trockengewicht, ist und
   - der Restfeuchtegehalt zwischen 0,2 und 1 Gew.-%, bezogen auf das Trockengewicht, liegt

   oder wobei

   - das keramische Material Aluminiumoxid $Al_2O_3$ ist, und
   - wobei der Gehalt an Sinteradditiv zwischen 0,02 und 15 % liegt, wobei das Sinteradditiv ausgewählt ist aus der Gruppe bestehend aus Oxiden der Elemente Si, Seltenerden, Elementen der Spalten 2, 3 und 4 des Periodensystems der Elemente und Mischungen davon und

- der Gehalt an erstem Bindemittel zwischen 2,5 Gew.-% und 4 Gew.-%, bezogen auf das Trockengewicht, liegt und
- der Gehalt an Verunreinigungen kleiner als 1 Gew.-%, bezogen auf das Trockengewicht, ist und
- der Restfeuchtegehalt zwischen 0,2 und 1 Gew.-%, bezogen auf das Trockengewicht, liegt

oder wobei

- das keramische Material Siliziumcarbid SiC ist, und
- der Gehalt an erstem Bindemittel zwischen 2,5 Gew.-% und 4 Gew.-%, bezogen auf das Trockengewicht, liegt und
- der Gehalt an Verunreinigungen kleiner als 1 Gew.-%, bezogen auf das Trockengewicht ist, und
- der Restfeuchtegehalt zwischen 0,2 und 1 Gew.-%, bezogen auf das Trockengewicht, liegt

oder wobei

- das keramische Material Siliziumcarbid SiC ist, und
- wobei der Gehalt an Sinteradditiv zwischen 0,5 und 5 % liegt, wobei das Sinteradditiv ausgewählt ist aus der Gruppe bestehend aus Oxiden der Elemente Si, Al, B, Seltenerden, Elementen der Spalten 2, 3 und 4 des Periodensystems der Elemente und Mischungen davon; Nitriden der Elemente Si, Al, B, der Seltenerden, der Elemente der Spalten 2, 3 und 4 des Periodensystems der Elemente und Mischungen davon; und Carbiden der Elemente Si, Al, B, der Seltenerden, der Elemente der Spalten 2, 3 und 4 des Periodensystems der Elemente und Mischungen davon und
- der Gehalt an erstem Bindemittel zwischen 2,5 Gew.-% und 4 Gew.-%, bezogen auf das Trockengewicht, liegt und
- der Gehalt an Verunreinigungen kleiner als 1 Gew.-%, bezogen auf das Trockengewicht, ist und
- der Restfeuchtegehalt zwischen 0,2 und 1 Gew.-%, bezogen auf das Trockengewicht, liegt

oder wobei

- das keramische Material Siliziumnitrid $Si_3N_4$ ist, und
- der Gehalt an erstem Bindemittel zwischen 2,5 Gew.-% und 4 Gew.-%, bezogen auf das Trockengewicht, liegt und
- der Gehalt an Verunreinigungen kleiner als 1 Gew.-%, bezogen auf das Trockengewicht, ist und
- der Restfeuchtegehalt zwischen 0,2 und 1 Gew.-%, bezogen auf das Trockengewicht, liegt

oder wobei

- das keramische Material Siliziumnitrid $Si_3N_4$ ist, und
- wobei der Gehalt an Sinteradditiv zwischen 0,5 und 15 % liegt, wobei das Sinteradditiv ausgewählt ist aus der Gruppe bestehend aus Oxiden der Seltenerden, Elementen der Spalten 2, 3 und 4 des Periodensystems der Elemente und Mischungen davon; und Seltenerdennitriden, Elementen der Spalten 2, 3 und 4 des Periodensystems der Elemente und Mischungen davon und
- der Gehalt an erstem Bindemittel zwischen 2,5 Gew.-% und 4 Gew.-%, bezogen auf das Trockengewicht, liegt und
- der Gehalt an Verunreinigungen kleiner als 1 Gew.-%, bezogen auf das Trockengewicht, ist und
- der Restfeuchtegehalt zwischen 0,2 und 1 Gew.-%, bezogen auf das Trockengewicht, liegt.

4. Pulver nach einem der vorhergehenden Ansprüche, wobei der Gehalt an zusätzlichem Bindemittel zwischen 0,5 Gew.-% und 1 Gew.-%, bezogen auf das Trockengewicht, liegt

oder wobei

- der Gehalt an zusätzlichem Bindemittel zwischen 0,5 Gew.-% und 1 Gew.-%, bezogen auf das Trockengewicht, liegt und
- der Gehalt an temporärem Additiv zwischen 0,5 % und 1 % liegt.

5. Pulver nach einem der vorhergehenden Ansprüche, wobei das Granulat Partikel des keramischen Materials enthält, deren mittlerer Durchmesser $D_{50}$ kleiner als 1 $\mu$m ist.

**6.** Pulver nach einem der vorhergehenden Ansprüche, wobei das erste Bindemittel eine Glasübergangstemperatur größer -30 °C aufweist.

**7.** Pulver nach einem der vorhergehenden Ansprüche, wobei das erste Bindemittel ausgewählt ist aus amorphen organischen Polymeren, Polyacrylharzen, Polymeren auf der Basis von reinen Acrylaten, Copolymeren auf der Basis von Acrylaten und Styrol und Mischungen davon.

**8.** Pulver nach einem der vorhergehenden Ansprüche, wobei das erste Bindemittel und/oder das zusätzliche Bindemittel ausgewählt sind aus Polymeren, die keine anorganischen Elemente enthalten.

**9.** Pulver nach einem der vorhergehenden Ansprüche, wobei das temporäre Additiv ein organisches Additiv ist, wobei der Gehalt an organischem Additiv kleiner als 1 % ist, wobei der Gesamtgehalt an Bindemittel(n) und an organischem Additiv kleiner als 5 % ist, wobei das organische Additiv ausgewählt ist aus Dispergiermitteln oder Tensiden, Verdickungsmitteln, Antischaummitteln, Konservierungsmitteln, Gleitmitteln und Mischungen davon.

**10.** Pulver nach einem der vorhergehenden Ansprüche, wobei

- der mittlere Durchmesser $D_{50}$ größer als 90 $\mu$m und kleiner als 120 $\mu$m ist; und/oder
- das Perzentil 10 $D_{10}$ größer als 50 $\mu$m ist; und/oder
- das Perzentil 90 $D_{90}$ kleiner als 300 $\mu$m ist; und/oder
- das Perzentil 99,5 $D_{99,5}$ kleiner als 400 $\mu$m ist.

**11.** Pulver nach einem der vorhergehenden Ansprüche, wobei der Restfeuchtegehalt zwischen 0,2 und 1 Gew.-%, bezogen auf das Trockengewicht, liegt.

**12.** Pulver nach einem der vorhergehenden Ansprüche, wobei das Zirkoniumdioxid, das Aluminiumoxid, das erste Bindemittel, das zusätzliche Bindemittel und das temporäre Bindemittel homogen in dem Granulat des Pulvers verteilt sind.

**13.** Pulver nach einem der vorhergehenden Ansprüche, wobei mehr als 80 % des Granulats diese chemische Zusammensetzung aufweist.

**14.** Verfahren zur Herstellung eines Sinterteils, umfassend die folgenden Schritte:

A) Mischen von Ausgangsmaterialien, um eine Ausgangsbeschickung zu bilden, umfassend ein Granulatpulver nach einem der vorhergehenden Ansprüche, wobei das Granulatpulver mindestens 60 % des Gewichts der Ausgangscharge ausmacht,
B) Ausbilden einer Vorform aus der Ausgangsbeschickung,
C) gegebenenfalls maschinelles Bearbeiten der Vorform,
D) Sintern der Vorform, um das Sinterteil zu erhalten,
E) gegebenenfalls Bearbeiten und/oder Schleifen des Sinterteils.

**Claims**

**1.** Powder comprising granules which is intended in particular for the production of ceramic sintered parts, said powder having the following chemical composition by weight, on the basis of the dry matter:

- a ceramic material and, optionally, a stabilizer for said ceramic material: to make up 100%;
- at least 1.0% of a first binder having a glass transition temperature of less than 15°C;
- 0 to 4.0% of an additional binder having a glass transition temperature of greater than 25°C;
- 0 to 4.0% of a temporary additive different from a first binder and from an additional binder, the total content of said first binder, of said additional binder and of said temporary additive being less than 9.0%;
- 0 to 15% of an additive for sintering the ceramic material;
- less than 2.0% of impurities;

the median diameter $D_{50}$ of the powder being between 80 and 130 $\mu$m, the percentile $D_{99,5}$ being less than 500 $\mu$m the 10 percentile $D_{10}$ being greater than 40 $\mu$m and the relative density of the granules being between 30% and 60%,

the ceramic material being chosen from the group made up of aluminum nitride, boron nitride, silicon nitride, titanium nitride, titanium carbide, silicon carbide, tungsten carbide, zirconium carbide, alumina, yttrium oxide, cerium oxide, cerium oxide doped with rare earths, cerium oxide doped with zirconia, the spinel $MgAl_2O_4$, garnets, perovskites of formulae A' B' $O_3$, feldspars, cordierites, and mixtures thereof.

2. Powder according to the preceding claim, in which:

   - for the cerium oxide doped with rare earths, said rare earth is chosen from the group made up of $La_2O_3$, $Pr_2O_3$, $Sm_2O_3$, $Gd_2O_3$ and mixtures thereof, and/or
   - for the perovskites of structure A'B'$O_3$, the element A' is chosen from the group made up of the elements Sr, Ca, Pb, Ba and mixtures thereof; and B' is chosen from the group made up of the elements Ti, Zr and mixtures thereof, and/or
   - the feldspars are chosen from the group made up of feldspars of formula $XO.Al_2O_3.2SiO_2$, with X chosen from the group made up of the elements of Group 2 of the periodic table and mixtures thereof, and/or of formula $X'_2O.Al_2O_3.2SiO_2$, with X' chosen from the group made up of the elements of Group 1 of the periodic table of elements and mixtures thereof, and/or of formula $Z_2O_3.Al_2O_3.2SiO_2$, with Z chosen from the group made up of the rare earths, and/or
   - the cordierites are chosen from the group made up of cordierites of formula $XO.Al_2O_3. (5/2)SiO_2$, with X chosen from the group made up of the elements of Group 2 of the periodic table and mixtures thereof, of cordierites of formula $X'_2O.Al_2O_3.5/2SiO_2$, with X' chosen from the group made up of the elements of Group 1 of the periodic table of elements and mixtures thereof, and of cordierites of formula $Z_2O_3.Al_2O_3.(5/2)SiO_2$, with Z chosen from the group made up of the rare earths and mixtures thereof.

3. Powder according to either one of the preceding claims, in which

   - the ceramic material is alumina $Al_2O_3$, and
   - the content of first binder is between 2.5% and 4% as percentages by weight on the basis of the dry matter, and
   - the content of impurities is less than 1%, as percentage by weight on the basis of the dry matter, and
   - the residual moisture content is between 0.2% and 1% as percentages by weight on the basis of the wet powder,

   or in which

   - the ceramic material is alumina $Al_2O_3$, and
   - the content of sintering additive is between 0.02 and 15%, said sintering additive being chosen from the group made up of oxides of the element Si, of rare earths, of the elements of Groups 2, 3 and 4 of the periodic table of elements, and mixtures thereof, and
   - the content of first binder is between 2.5% and 4% as percentages by weight on the basis of the dry matter, and
   - the content of impurities is less than 1% as percentage by weight on the basis of the dry matter, and
   - the residual moisture content is between 0.2% and 1% as percentages by weight on the basis of the wet powder,

   or in which

   - the ceramic material is silicon carbide SiC, and
   - the content of first binder is between 2.5% and 4% as percentages by weight on the basis of the dry matter, and
   - the content of impurities is less than 1% as percentage by weight on the basis of the dry matter, and
   - the residual moisture content is between 0.2% and 1% as percentages by weight on the basis of the wet powder,

   or in which

   - the ceramic material is silicon carbide SiC, and
   - the content of sintering additive is between 0.5 and 5%, said sintering additive being chosen from the group made up of oxides of the elements Si, Al and B, of rare earths, of the elements of Groups 2, 3 and 4 of the periodic table of elements, and of mixtures thereof; of nitrides of the elements Si, Al and B, of rare earths, of the elements of Groups 2, 3 and 4 of the periodic table of elements, and of mixtures thereof; and of carbides of the elements Si, Al and B, of rare earths, of the elements of Groups 2, 3 and 4 of the periodic table of elements, and of mixtures thereof, and
   - the content of first binder is between 2.5% and 4% as percentages by weight on the basis of the dry matter, and
   - the content of impurities is less than 1% as percentage by weight on the basis of the dry matter, and

- the residual moisture content is between 0.2% and 1% as percentages by weight on the basis of the wet powder,

or in which

- the ceramic material is silicon nitride $Si_3N_4$, and
- the content of first binder is between 2.5% and 4% as percentages by weight on the basis of the dry matter, and
- the content of impurities is less than 1% as percentage by weight on the basis of the dry matter, and
- the residual moisture content is between 0.2% and 1% as percentages by weight on the basis of the wet powder,

or in which

- the ceramic material is silicon nitride $Si_3N_4$, and
- the content of sintering additive is between 0.5 and 15%, said sintering additive being chosen from the group made up of oxides of rare earths, of the elements of Groups 2, 3 and 4 of the periodic table of elements, and of mixtures thereof; and of nitrides of rare earths, of the elements of Groups 2, 3 and 4 of the periodic table of elements, and of mixtures thereof, and
- the content of first binder is between 2.5% and 4% as percentages by weight on the basis of the dry matter, and
- the content of impurities is less than 1% as percentage by weight on the basis of the dry matter, and
- the residual moisture content is between 0.2% and 1% as percentages by weight on the basis of the wet powder.

4. Powder according to any one of the preceding claims, in which the content of additional binder is between 0.5% and 1% as percentage by weight on the basis of the dry matter,
or in which

- the content of additional binder is between 0.5% and 1% as percentage by weight on the basis of the dry matter, and
- the content of temporary additive is between 0.5% and 1%.

5. Powder according to any one of the preceding claims, in which the granules incorporate particles of ceramic material of which the median diameter $D_{50}$ is less than 1 $\mu$m.

6. Powder according to any one of the preceding claims, in which the first binder has a glass transition temperature of greater than -30°C.

7. Powder according to any one of the preceding claims, in which the first binder is chosen from amorphous organic polymers, polyacrylic resins, polymers based on pure acrylates, copolymers based on acrylates and styrene, and blends thereof.

8. Powder according to any one of the preceding claims, in which the first binder and/or the additional binder are chosen from polymers not comprising inorganic elements.

9. Powder according to any one of the preceding claims, in which said temporary additive is an organic additive, the content of said organic additive being less than 1%, the total content of binder (s) and of organic additive being less than 5%, said organic additive being chosen from dispersants or surfactants, thickeners, antifoaming agents, preservatives, lubricants, and mixtures thereof.

10. Powder according to any one of the preceding claims, in which

- the median diameter $D_{50}$ is greater than 90 $\mu$m and less than 120 $\mu$m; and/or
- the 10 percentile $D_{10}$ is greater than 50 $\mu$m; and/or
- the 90 percentile $D_{90}$ is less than 300 $\mu$m; and/or
- the 99.5 percentile $D_{99.5}$ is less than 400 $\mu$m.

11. Powder according to any one of the preceding claims, in which the residual moisture content is between 0.2% and 1%, as percentage by weight on the basis of the wet powder.

12. Powder according to any one of the preceding claims, in which the zirconia, the alumina, the first binder, the additional binder and the temporary binder are distributed homogeneously in the granules of the powder.

**13.** Powder according to any one of the preceding claims, in which more than 80% of the granules have said chemical composition.

**14.** Process for producing a sintered part, comprising the following steps:

A) mixing raw materials so as to form a starting charge comprising a powder comprising granules according to any one of the preceding claims, said powder comprising granules representing at least 60% of the weight of the starting charge,
B) forming a preform from said starting charge,
C) optionally, machining said preform,
D) sintering said preform so as to obtain said sintered part,
E) optionally, machining and/or rectifying said sintered part.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 8217448 B

**Littérature non-brevet citée dans la description**

- **REED, J. S.** In Principles of ceramics processing. Wiley & Sons, 1995
- **WHITMAN, D. W. ; TANG, X. ; CUMBERS, D. I.** Using polymer blends to fine-tune binder performance (No. CONF-9505249). American Ceramic Society, 1996
- **LUKASIEWICZ, S. J.** Spray-Drying Ceramic Powders. *Journal of the American Ceramic Society,* 1989, vol. 72 (4), 617-624
- **HOFFMAN, E. R.** Importance of Binders in Spray-Dried Pressbodies. American Ceramic Society Bulletin, 1972, vol. 51, 240
- Polymer Handbook. John Wiley & Sons, 1999
- **A. H. KUPTSOV ; GERMAN NIKOLAEVICH ZHIZHIN.** Handbook of fourier transform Raman and infrared spectra of polymers. Elsevier, 1998, vol. 45